# EUROPÄISCHE PATENTSCHRIFT

(11) **EP 0 983 883 B1**
(45) Veröffentlichungstag und Bekanntmachung des Hinweises auf die Patenterteilung: **28.04.2004**
(21) Anmeldenummer: 99115975.7
(22) Anmeldetag: 13.08.1999
(51) Int. Cl.: B60G 21/00, B60G 17/015, B62D 17/00

(54) **Achsanordnung für ein Fahrzeug und Verfahren zu ihrem Betrieb**
Axle assembly for a vehicle and method for its operation
Ensemble de train de suspension pour véhicule et procédé pour son fonctionnement

(30) Priorität: 13.08.1998 DE 19836658
(43) Veröffentlichungstag der Anmeldung: 08.03.2000
(73) Patentinhaber: Sieben, Hans Hermann, 55270 Zornheim (DE)
(72) Erfinder: Sieben, Hans Hermann, 55270 Zornheim (DE)
(74) Vertreter: Melzer, Wolfgang, Dipl.-Ing.

(56) Entgegenhaltungen:
- DE-A- 3 942 654
- DE-A- 4 219 185
- DE-C- 3 535 589
- FR-A- 2 137 849
- US-A- 5 772 224

## Beschreibung

Die Erfindung gestaltet eine verstellbare Achsanordnung für ein Fahrzeug, mit an Längslenkern geführten, einzeln höhenverstellbar aufgehängten Rädern, und gibt ein Verfahren zu ihrem Betrieb an.

Solche Achsanordnungen sind als Hinterachse für frontgetriebene Fahrzeuge - mit sogenanntem "Triebkopf" - im innerstädtischen Liefer- und Verteilerverkehr zur leichterer Be- und Entladung und auch im Personenverkehr sinnvoll einsetzbar. Als Beispiel seien leichte Busse mit absenkbarem, niedrigem Einstieg oder Fahrzeuge zum Behindertentransport angeführt.

Grundlegende Merkmale einer solchen Achsanordnung sind z.B. aus der DE 35 35 589 C1 bekannt.

Diese bekannte Achsanordnung umfaßt zwei Träger, die als quer zur Fahrtrichtung angeordnete Halbachsrohre ausgebildet und im Chassis um ihre Längsachse drehbar aufgenommen und abgestützt sind. In jedem Träger ist ein radführender Längslenker drehbar gelagert und gegenüber dem Träger elastisch über eine Federung abgestützt. Die Träger sind über eine Stelleinrichtung verstellbar gegen das Chassis abgestützt.

Die Abstützung des Längslenkers gegen den Träger übernimmt bei der DE 35 35 589 C1 eine Drehstab- oder eine Gummi- Drehschub- Feder, die in den Träger eingesetzt ist. Ein Teleskop- Schwingungsdämpfer wirkt zwischen dem Längslenker und einem am äußeren Ende des Trägers angeordneten Hebel.

Der Träger ist im vertikalen Steg des Chassis- Längsträgers aufgenommen. Durch Verdrehen des Trägers um seine Längsachse wird die Federung entspannt und das Chassis unter seinem Eigengewicht gegebenenfalls bis zum Aufliegen auf der Fahrbahn abgesenkt.

Hierfür wird der Hebel am Träger herangezogen, an dem als Stelleinrichtung auf jeder Seite jeweils ein Zylinder angreift, der andererseits am Chassis angelenkt ist. Dieser Zylinder kann den Träger verdrehen oder steif abstützen, so daß das Chassis trotz der Wirkung der zwischengeschalteten Feder gegenüber jedem Rad verstellbar ist.

Im Ergebnis kann das Chassis so von einer beladungsunabhängigen oder frei definierbaren Fahrtstellung über diese hinaus angehoben oder bis auf die Fahrbahn abgesenkt werden.

Die individuelle Verstellbarkeit der einzelnen Räder erlaubt dabei ein horizontales Ausrichten, ein Anpassen an ungleiche Ladungsverteilung oder eine gezielte Schrägstellung des Fahrzeuges z.B. wegen Ungleichförmigkeiten der Standfläche (Bordstein, Straßenrand) zur Erleichterung der Be- und Entladung.

Die üblicherweise starke Motorisierung solcher Fahrzeuge, die auch bei hoher Zuladung schnellen Transport zwischen den einzelnen Lade- und Lieferstellen ermöglicht, führt tendenziell zu einem unstetigen, sehr dynamischen Fahrbetrieb. Dabei ist die Ladung hohen Belastungen durch Schwingungen und Stöße ebenso ausgesetzt wie durch Beschleunigungen und Lageänderungen z.B. in Fahrzeugquerrichtung (Kurvenfahrt). Hier besteht Gefahr durch Verrutschen der Ladung bis hin zum Verlust von Ladungsteilen etwa bei hoch gestapelten Ladungen im Getränke- Verteilerverkehr.

Ein weiteres Problem stellt die Lage des Schwerpunktes dar, die sich bei solchen Fahrzeugen mit der Größe und Art der Ladung sehr stark ändern kann. Als Folge erzeugt in einer Kurve eine gegebene Zuladung bei einer gegebenen Querbeschleunigung abhängig von der Lage des Ladungs- Schwerpunktes unterschiedliche Radlaständerungen und Feder-Bewegungen aus Laständerungen zwischen kurveninnerem und kurvenäußerem Rad.

Entsprechend liegt der Erfindung die Aufgabe zugrunde, eine Achsanordnung der bekannten Art dahingehend zu verbessern, daß die Fahrsicherheit erhöht und die Beanspruchung und Belastung des Ladeguts verringert bzw.der Komfort von Passagieren erhöht wird.

Die Lösung der Aufgabe ist mit der verstellbaren Achsanordnung des Patentanspruchs 1 gegeben.

Weiterbildungen sind Gegenstand der jeweiligen Unteransprüche.

Der der Erfindung zugrundeliegende Ansatz sieht also für die Kurvenfahrt vor, jeweils zumindest einen der aus der DE 35 35 589 C1 prinzipiell bekannten beiden Halbachs-Träger mindestens in seiner vertikalen Ebene zu verschwenken, um in der Kurvenfahrt eine gegen die Fliehkraft stützende und stabilisierende Verstellung des Radsturzes zu erreichen. Im Zusammenhang erfolgt über eine Höhen-Verstellung des Rades bzw. der Räder eine Lage- Kompensation des Chassis zum Ausgleich zumindest der geometrischen Lageänderung des Chassis bei der Sturz- Verstellung.

Für hier vorliegende "niederfrequente" Stellbewegungen im Chassis- Lageausgleich ist eine aktive Verstellung in einer Richtung - Anheben gegen die Radlast am kurvenäußeren Rad - normalerweise ausreichend. In der anderen Stellrichtung - Absenken in Richtung der Radlast am kurveninneren Rad - kann die Stellenergie passiv aus der Wirkung der Radlast selbst aufgebracht werden.

Eine Verschwenkung eines oder beider Träger erfolgt aufgrund von Signalen, die mit einer Lenkbetätigung zusammenhängen bzw. deren Folge sind, in Verbindung mit einer Beeinflussung von die Stellung jedes Rades zum Chassis bestimmenden Elementen.

Diese Signale können z.B. schnell und direkt aus dem in einer Kurve an der Lenkung anstehenden Reaktionsmoment aus der Seitenführungskraft am Reifen/Rad und dem in der Radaufhängung konstruktiv vorgegebenen Nachlauf am gelenkten Rad gewonnen werden. So kann etwa aus der Größe des in einer hydraulischen Hilfskraftlenkung unverzögert wirksamen Lenkhilfsdruckes und gegebenenfalls seiner zeitlichen Ableitung(en) ein erstes Signal für eine schnelle, sogar voreilende Reaktion gebildet werden. Die Signale können aber auch mit entsprechender Verzögerung aus der Größe einer als Folge der Lenkbetätigung auftretenden Radlaständerung an den Rädern der Achsanordnung selbst bestehen.

In einer Ausführung der Erfindung sind die Halbachs- Träger an ihren fahrzeugmittigen Enden über einen in der vertikalen Fahrzeug- Längsmittelebene gelagerten Waagebalken verschwenkbar. In einer anderen Ausführung kann etwa durch Verschieben von am inneren Ende des jeweiligen Trägers angreifenden Stellelementen auf einer Führungsbahn als Schwenkeinrichtung eine eigenständige oder gekoppelte Schwenk-Bewegung der Träger erzeugt werden.

Im Ergebnis wird - unter Verschiebung der Spur insgesamt nach kurvenaußen - bei in der Chassis- Ebene liegender Schwenkachse des Waagebalkens bzw. bei vertikaler Verschwenkung des Trägers der Radsturz zur Stabilisierung des Fahrzeugs in der Kurvenfahrt gegen die Fliehkraft gestellt.

Damit wird trotz seitenkraftbedingter Reifendeformation ein gutes Tragbild und damit guter Fahrbahnkontakt des Reifens vor allem am kurvenäußeren, höher belasteten Rad erreicht, was entsprechend günstige Auswirkungen auf die Fahrsicherheit und den Reifenverschleiß hat.

Bei allein senkrecht zur Chassis- Ebene stehender Schwenkachse bzw. Verschwenkung der Träger in der Chassis- Ebene ergibt die Verstellung eine Änderung allein des Spurwinkels des betroffenen Rades bzw. der angeschlossenen Räder. Eine gegensinnige Verstellung beider Träger führt damit insgesamt zu einer Lenkbewegung der Räder.

Bei höheren Fahrgeschwindigkeiten und kleinen Lenkwinkeln der Vorderräder erhöht, wie an sich bekannt, ein gleichsinniger Lenkeinschlag der Hinterräder den Fahrkomfort z.B. bei einem langsamen Wechsel der Fahrspur. Bei niedrigen Fahrgeschwindigkeiten und großen Lenkeinschlägen der Vorderräder erhöht ein gegensinniger Lenkeinschlag der Hinterräder an einer Achsanordnung nach der Erfindung die Wendigkeit etwa in engen oder zugeparkten Straßen.

Ist die Schwenkachse zwischen diesen beiden Stellungen ausgerichtet, ergeben sich entsprechend anteilige Sturzänderungen und Lenkausschläge.

Mitlenken und Gegenlenken bzw. Radsturz- Änderungen und ihre anteiligen Kombinationen sind mit von der Erfindung abweichenden Maßnahmen auch bei einer Hinterachse nach der DE 42 19 185 Al, das als nächstliegender Stand der Technik angesehen wird, erzielbar.

Bei der dort vorgeschlagenen Achse greift die Verstellung direkt an achsschenkelfesten, d.h. das Rad tragenden Schräglenkern an und wirkt, unter elastischer Verformung der Lenker selbst oder ihrer Elastomer- Lagerbuchsen direkt und stets gemeinsam auf beide Räder der Achsanordnung. Die Verstellung der chassisseitigen Lager dieser Schräglenker übernimmt ein am Chassis gelagerter und als "exzentrischer Waagebalken" gestalteter Antrieb. Eine solche Verstellbarkeit unter elastischer Verformung radführender Teile beeinträchtigt die Rad- und Spurführungseigenschaften der Achse.

Bei der Erfindung ist, davon noch weiter abweichend, die Verstellung der Träger einzeln und unterschiedlich ausführbar.

Bei im Extremfall gleichzeitiger Verstellung des Radsturzes über den Träger eines kurvenäußeren Rades und der Radspur in Richtung Nachspur über den Träger eines kurveninneren Rades kann die Fahrstabilität in der Kurve weiter erhöht werden, da das kurveninnere Rad über seinen Schräglaufwinkel (und unter teilweisem "Radieren" unter Seitenschlupf) einen größeren Teil der Fliehkraft bzw. der Querbeschleunigung "aktiv" abstützt und durch die einseitige Erhöhung des Fahrwiderstands kurveninnen die Lenkwilligkeit und damit die Fahrstabilität dynamisch erhöht.

Nach der Erfindung erfolgt in Verbindung mit der Sturzverstellung ein Ausgleich zumindest für die von der Sturzverstellung verursachte geometrische Chassis-Lageänderung sowie für eine durch eine Querbeschleunigung/ Fliehkraft in der Kurve bedingte Lastverlagerung und Neigung dadurch, daß die Federung und/oder die Elemente der Stelleinrichtung zumindest in einem ersten Schritt aufgrund von Signalen verstellt werden, die bei der Lenkbetätigung anfallen.

Die Lageänderung des Chassis kann dabei durch Verschieben eines Fluid- Volumens zwischen dem rechten und dem linken Federelement und/oder (sofern vorhanden) den beiden Stellelementen (z.B. Zylindern) der Stelleinrichtung mit einer Gleichgang-Zylinderanordnung erfolgen, was insbesondere in Verbindung mit einer linearen, mechanischen Federung Lageänderungen "symmetrisch" ausgleicht und generell das Chassis, wie für sich aus der DE-AS 22 23 250 bekannt, gegebenenfalls bis zum Ausgleich der Querbeschleunigung oder darüber hinaus "in die Kurve legen" kann.

Bei dem Lageausgleich nach der Erfindung können durch entsprechende Auslegung von in Folge den Feder- bzw. Stellelementen jeder Seite einzeln zu- und abzuführenden (Teil-) Volumina für die Federung und/oder die Stelleinrichtung neben der Lageänderung des Chassis bei der Radsturz- Änderung auch derartige besondere Eigenschaften der Federung berücksichtigt werden.

Eine kostengünstige, für ein "Einstiegsmodell" eines mit der Erfindung ausgerüsteten Fahrzeuges besonders geeignete Ausführung ergibt sich, wenn zur Lageänderung des Chassis in der Fahrt - und im Rahmen ihrer Möglichkeiten auch zur Absenkung zur Be- und Entladung - allein die Federelemente herangezogen werden, während die Stelleinrichtung - zunächst - durch eine steife Verbindung zwischen dem Träger und dem Chassis ersetzt wird.

Je nach Auslegung des Fahrzeuges kann dann zwar der Höhen- Verstellbereich bzw. die Absenkmöglichkeit beschränkt sein. Die volle Absenkbarkeit läßt sich jedoch gegebenenfalls durch Nachrüstung einer Stelleinrichtung relativ einfach und kostengünstig herstellen.

So können etwa die Hebel der Halbachs- Träger zunächst durch an die Gegebenheiten des Fahrzeugs anpaßbare einfache, starre Streben abgestützt werden, die dann später bei Bedarf durch entsprechende Zylinder als Stellelemente der Stelleinrichtung mit der zugehörigen Steuerung ersetzt werden.

In einer vorteilhaften Weiterbildung der Erfindung ist es darüber hinaus möglich, den Waagebalken bzw.die fahrzeugmittigen Enden der Träger insgesamt in Fahrzeuglängsrichtung verschiebbar anzuordnen. Eine Verschiebung nach hinten während eines Bremsvorganges vergrößert die Vorspur der Achsanordnung und kompensiert oder übersteuert die Tendenz der doch elastischen Längslenker-Radaufhängung zur Vorspur- Verringerung unter Belastung und Bremskräften. Damit wird die Fahrstabilität in der Bremsung erhöht.

Die Verwendung von - gegebenenfalls zusätzlichen - (hydro-) pneumatischen Federelementen - und sei es nur in Form von teiltragenden Einrohr-Schwingungsdämpfern, wie sie bereits bei der DE 35 35 589 C1 möglich ist - ergibt einen weiteren günstigen Einfluß auf den Fahrkomfort bzw. die Transportqualität.

Durch die progressive Federkennlinie solcher Federelemente ist der Einfluß von Last bzw. Beladung auf das Schwingungsverhalten des Fahrzeugs (Rad- Eigenfrequenz) im wesentlichen kompensierbar. So können gefährliche "Schwebungen" in den vertikalen (Hub-) Schwingungs- Bewegungen des voll beladenen Fahrzeuges in der Kurvenfahrt verhindert werden.

Diese Hubschwingungen des Chassis gerade an der Hinterachse führen in Verbindung mit entsprechenden Schwankungen des Radkontakts mit der Fahrbahn leicht zum Verrutschen oder zum Abwurf von Teilen der Ladung. Andererseits kann das Fahrzeug in der Kurve insgesamt leicht ausbrechen.

Die Gefahr des Auftretens von Schwebungen wird mit der zumindest zusätzlichen Anordnung von pneumatischen oder hydropneumatischen Federelementen beseitigt, die eine von der Belastung abhängige Federkennlinie haben.

Weiter wird im Rahmen der Erfindung ein fluidisches, also hydraulisches und/oder pneumatisches System vorgeschlagen, das beim Auftreten eines mit einer Lenkbetätigung zusammenhängenden Signales die Radsturz- Verstellung über die Schwenkeinrichtung bewirkt und zum Lageausgleich in der Kurvenfahrt geeignet ist.

Die im Fachgebiet in vielfacher Form bekannte kontinuierliche, aktive Lagesteuerung oder -Regelung für Fahrzeuge unter Verwendung von Sensoren für Einfederung, Federdruck, Neigungswinkel, Beschleunigungen, etc. ist mit der Achsanordnung nach der Erfindung ebenfalls möglich. Sie erfordert aber hohen Aufwand und entsprechend hohe Kosten für die Sensoren, für die Signalverarbeitung zu (kontinuierlichen) Steuersignalen und das entsprechende Steuersystem. Sie ist damit für kleine Losgrößen oder für eine Nachrüstung bestehender Fahrzeuge wenig geeignet und entspricht nicht der Forderung nach Einfachheit aus dem rauhen Alltagsbetrieb solcher Fahrzeuge.

Nach einer vorteilhaften Ausführung der Erfindung können deshalb für die Schwenkeinrichtung (Radsturz, Spur), die Stelleinrichtung (z.B. Querneigungs- und Niveauverstellung, Wankausgleich), die Federung (z.B. Last- und Wankausgleich) und die Verschwenkeinrichtung (Aufteilung von Radsturz- und Spurverstellung) in Verbindung mit hydraulischen oder auch elektrischen Stellantrieben einfache "Druckübersetzer" verwendet werden.

Ein solcher "Druckübersetzer" besteht aus einem ein Volumen definierenden Zylinder mit einem beweglichen Trenn- Kolben, der nach den anstehenden Kraft- bzw. Druckverhältnissen das im Zylinder definierte Volumen als "Portion" insgesamt verschiebt und dem angeschlossenen (Stell-) System zuführt oder daraus entnimmt. Bei rein fluidischer Beaufschlagung kann der Trenn- Kolben über sein Flächenverhältnis eine den Erfordernissen angepaßte Druckübersetzung ausführen.

Mit einem solchen Druckübersetzer wird also ein durch das Hubvolumen seines Zylinders definiertes Teilvolumen in einen hydraulischen oder pneumatischen (Feder-) Kreis ein- und wieder ausgekoppelt. wenn aufgrund eines mit einer Lenkbetätigung verbundenen Signals z.B. ein Ventil umsteuert und einen hydraulischen oder pneumatischen Steuerdruck auf den Kolben des Druckübersetzers schaltet. Wenn das Ventil auf den drucklosen Tank umschaltet, verschiebt der innere Systemdruck den Trenn- Kolben.

Statt der fluidischen ist im Rahmen der Erfindung auch eine elektrische Verstellung einer dem Druckübersetzer äquivalenten Kolben- Zylinder- Einheit etwa über einen motorgetriebenen Spindeltrieb möglich, wie auch auf diese Weise statt einer fluidischen Längenverstellung der Federelemente bzw. der Stell- oder Schwenkelemente prinzipiell eine elektrische Verstellung möglich ist.

In einer ersten Stufe kann das mit einer Lenkbetätigung verbundene Signal z.B. der in einer hydraulischen Lenkhilfe zum Ausgleich des Momentes aus Nachlauf und Seitenführungskraft am Reifen aufgebaute Lenkhilfsdruck oder ein äquivalenter Parameter einer Hilfskraftlenkung sein. Dieses Signal ist ohne Zeitverzögerung wirksam und seine Größe kann mit einfachen, im Fachgebiet gängigen Mitteln - z.B. Druckschalter - in eine zur Ansteuerung eines Ventiles für die schnelle Steuerung eines ersten Druckübersetzers geeignete fluidische oder auch elektrische Größe umgewandelt werden.

Die schnelle Reaktion aufgrund z.B. des auftretenden Lenkhilfsdruckes führt zu einer Ausgleichsbewegung am Chassis, die Einfederbewegungen aus Lastverlagerung infolge Querbeschleunigung und damit Lageänderungen des Chassis vorwegnimmt.

Der weitere Lageausgleich kann - über die mit der Lastverlagerung verzögert sich ändernde Radlast - als Folge des variablen Druckes in den (hydro-) pneumatischen Federelementen oder den Zylindern der Stelleinrichtung als Schalt- Parameter gesteuert werden, der etwa Schaltventile von weiteren Druckübersetzern ansteuert.

Durch unterschiedlich hohe Vorspannung mehrer z.B. gleicher, paralleler Schaltventile, die jeweils einen Druckübersetzer steuern, auf individuelle Werte des Schaltparameters können in definierter Folge vorgegebene Teilvolumina in einen Stellkreis (positiv) eingekoppelt oder (negativ) aus ihm entnommen werden.

Die Größe der in Folge aktivierten positiven und negativen Teilvolumina berücksichtigt gegebenenfalls eine lastabhängige nichtlineare Kennlinie der - (hydro-) pneumatischen - Federelemente, wobei ein Versatz der Schaltpunkte bei der Ansteuerung wesentlich einander zugeordneter positiver und negativer Teilvolumina die Stellbewegung insgesamt verstetigt.

Die an sich stufige Verstellung wird durch die Strömungsführung etwa in Verbindung mit Drosselanordnungen mit festen und/oder (z.B. vom Stellkreis- Druck oder der Radlast abhängig) verstellbaren Drosseln weiter geglättet und in ihrem Zeitverhalten beeinflußt, so daß sich insgesamt eine quasi- stetige Stellbewegung ergibt und ein enges Toleranzband in der Stellbewegung am Chassis eingehalten werden kann.

Durch die Anordnung von Drosseln, Dämpfungs- und Ausgleichsvolumina etc. in der Führung des Steuerdruckes am Schaltventil wird ein unstetiger Betrieb der Schaltventile verhindert.

Durch eine zusätzliche "Selbst- Haltung" einer einmal eingeleiteten Schaltbewegung aus dem Druck des Stellkreises im Sinne eines bistabilen Kippschalters kann ein einmal dem Stellkreis zugeführtes oder ihm entnommenes Teilvolumen eines Druckübersetzers solange wirksam bleiben, wie der von Querbeschleunigung, Beladung etc. abhängige Druck im Stellkreis eine entsprechende Höhe hat und/oder das Signal von der Lenkung ansteht.

Insofern ist auch die Wirkung einer Niveauregelung mit einem Niveau- Ausgleich innerhalb eines Toleranzbandes erreichbar, das durch die Federkennlinie einerseits und die Höhenänderungen durch die den Systemkomponenten zugeführten oder entnommenen Teil- Volumina andererseits definiert ist.

Die im Vorstehenden ausgeführten Merkmale zur Steuerung der Achsanordnung ergeben insgesamt ein Verfahren zur Steuerung einer solchen Achsanordnung im Fahrbetrieb des Fahrzeugs.

Dabei sind grundsätzlich alle im Fachgebiet bekannten, mit einer Lenkbewegung zusammenhängenden, d.h. auch als Wirkungen und Folgen einer Lenkbewegung auftretenden Signale verwendbar: neben dem Vorliegen einer Lenkbewegung, der Größe des Lenkwinkels selbst oder seiner zeitlichen Ableitungen in Verbindung mit einem Schaltwert, allein oder in Verbindung mit der Fahrgeschwindigkeit, der Querbeschleunigung. Dies gilt auch und insbesondere, wie schon angesprochen, für die Lenkreaktionskraft und die von der Lage des Schwerpunktes abhängige Größe der Federdruck- oder Radlaständerung unter Querbeschleunigung in einer Kurve.

In Verbindung mit kontinuierlich erfaßten Signalen, die zu einer entsprechend kontinuierlichen und gegebenenfalls kombinierten Stellbewegung und Verstellung von Stelleinrichtungen und Federung führen, ist ein solches Verfahren aufwendig.

Vorzugsweise wird deshalb in einem Verfahren nach der Erfindung die Achsanordnung in stufenweiser Verstellung durch Verschieben bzw. Zu- und Abfuhr definierter Teilvolumina in den Teilsystemen der Achsanordnung etwa über Druckübersetzer betrieben, wie es das zuvor angesprochene Stellsystem erlaubt.

Eine solche stufenweise, etwa durch Drossel- und Dämpfungsanordnungen verstetigte Verstellung beim Erreichen von Schaltschwellen bei systemrelevanten Parametern erlaubt eine einfache und kostengünstige Darstellung eines Fahrzeuges mit einer Achsanordnung nach der Erfindung. Durch die Verwendung von gleichen Druckübersetzern, deren Schaltventile nur noch fahrzeugspezifisch auf definierte Druck- Schaltschwellen einzustellen sind und deren Volumenkapazität durch die Größe des leicht anzupassenden Kolben- Volumens definierbar ist, gilt dies auch schon für geringe Losgrößen.

Nach dem Verfahren kann etwa in einem ersten Bereich bis zu einem Schaltwert der Lenkreaktion oder des Lenkhilfsdruckes zunächst eine aktive Radsturz-, Spur- oder Lage- Verstellung unterbleiben.

Beim Erreichen des Schaltwertes erfolgt dann eine direkte Verstellung des Radsturzes zumindest des kurvenäußeren Rades, in Verbindung mit einem Ausgleich der Chassis-Lage.

Nachdem eine von der Radlast abhängige Lagesteuerung aber immer nur eine Reaktion auf schon eingetretene Zustandsänderungen sein kann, ist nach dem erfindungsgemäßen Verfahren vorgesehen, definierte Teilvolumina zunächst allein aufgrund der schnellen, unverzögerten Reaktion bei einer Lenkbetätigung aktiv zu verschieben.

Das Verschieben eines in jedem Druckübersetzer vorgegebenen Teilvolumens zwischen den Federelementen und/oder den Zylindern der Stelleinrichtung bzw. die Zufuhr solcher Teilvolumina zu oder die Entnahme aus den Federelementen und/oder Zylindern des kurveninneren und des kurvenäußeren Rades führt dabei zu einer schnellen Kompensation und unkritischen Überkompensation der Kurvenneigung, die mit Zunahme der Druckdifferenz der Federelemente (oder der Querbeschleunigung etc.) abgebaut wird.

Währenddessen setzt unabhängig davon als Reaktion auf die verzögert wirksame Radlaständerung in gleicher Weise die Kompensation über die vom Radlast (-Druck) gesteuerten Druckübersetzer ein.

Unter der Wirkung eines Hilfsdrucks (z.B. aus der entsprechend dimensionierten Lenkhilfspumpe bzw. des drucklosen Vorrats) an den auf ihren Schaltdruck vorgespannten, z.B. vom Radlast- Druck gesteuerten Ventilen an den Druckübersetzern von Stelleinrichtungen und Federung erfolgt so ein stufiger, auf die Radlastverhältnisse abgestimmter und durch Drosseln und Dämpfungsvolumina als Zeitglieder verstetigter Lageausgleich.

Mit dem Erreichen weiterer Schaltschwellen bei zunehmender Querbeschleunigung bzw. Radlaständerung werden in gleicher Weise weitere Druckübersetzer für eine weitere inkrementale aktive Verstellung einzelner oder mehrerer Komponenten wirksam werden.

Mit gleichartigen, nur vom Radlast- Druck gesteuerten Druckübersetzern ist ein langsamer, stetig wirksamer Lageausgleich im Sinne einer Niveauregelung möglich.

Im Folgenden werden Ausführungsbeispiele der Erfindung anhand der Zeichnung beschrieben.

Es zeigt:
Fig. 1 eine Ansicht einer Achsanordnung mit einem Waagebalken zur Radsturz-Verstellung und mit hydraulischen Zylindern als Stelleinrichtung, in Geradeausfahrt-Stellung ;
Fig.1a eine Ansicht entsprechend Fig.1, jedoch mit einer starren Strebe an Stelle der Stelleinrichtung ;
Fig.2 eine Ansicht der Achsanordnung der Fig.1, mit Radsturzverstellung für eine Rechtskurve ;
Fig.3 eine Ansicht einer Achsanordnung mit Verstellung der Halbachs- Träger zur Radsturz- Einstellung über eine gemeinsame Kulissenführung, in Fahrtrichtung ;
Fig.4 eine Ansicht entsprechend Fig.3 für eine Achsanordnung mit Einzelverstellung der Träger zur radweisen Sturz- Verstellung über getrennte Kulissenführungen mit Sturzverstellung links für eine Rechtskurve ;
Fig.5 eine Ansicht der Achsanordnung der Fig.4, von oben ;
Fig.6 eine Seitenansicht einer Achsanordnung mit Abstützung des radtragenden Längslenkers über ein Federelement an einem radialen, über einen Zylinder als Stelleinrichtung am Chassis abgestützten Hebel ;
Fig.7 eine Darstellung eines Hydrauliksystems zur quasi- kontinuierlichen bzw. diskontinuierlichen Verstellung von Radsturz und Stelleinrichtung bzw. Federung der Achsanordnung über Druckübersetzer ;
Fig.7a eine Darstellung der relevanten Verlaufsgrößen des Systems nach der Fig.7 für eine Rechtskurve, zunächst Größen des Gesamtfahrzeugs, dann die Stellantworten der Achsanordnung ;
Fig.8 eine Anordnung zur Verstellung von Radsturz und Stelleinrichtung bzw. Federung der Achsanordnung über Gleichgang- Zylinderanordnungen.

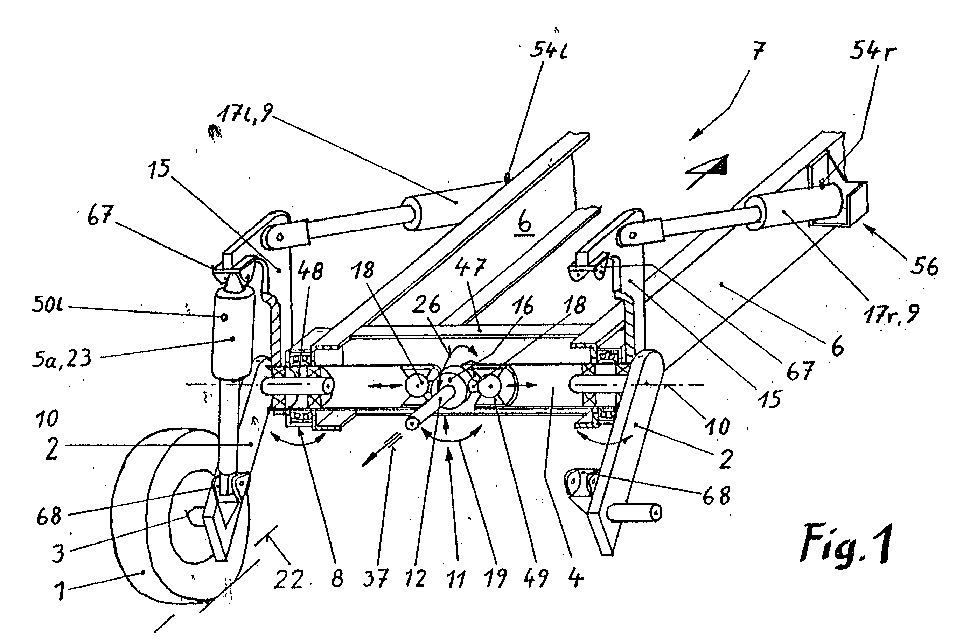

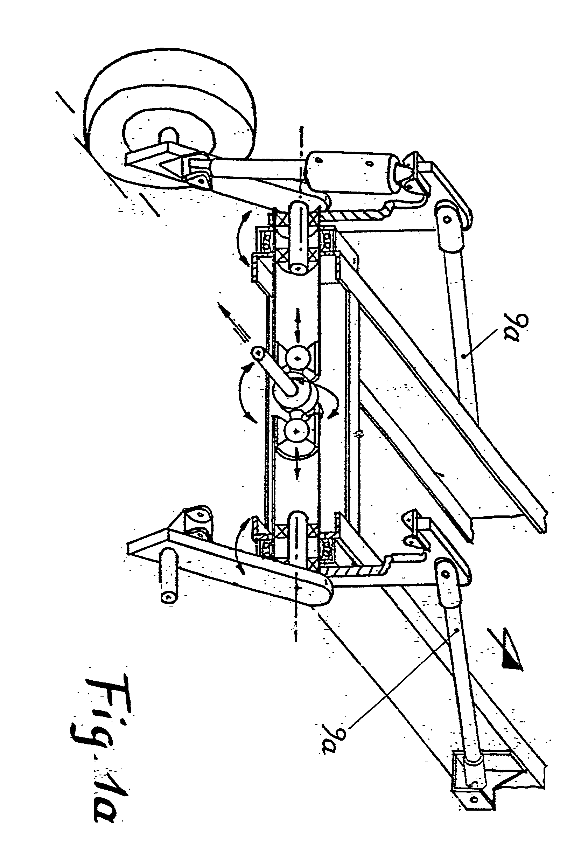

Gemäß Fig. 1 besteht das Chassis 7 eines Fahrzeugs, in das die Achsanordnung nach der Erfindung eingebaut ist, aus Längsträgern 6 und mindestens einem Querträger 47. Am vertikalen Steg der Längsträger 6 sitzt jeweils ein Lagergehäuse mit einem Lager 8, das winkelbeweglich z.B. als Pendel- oder Schwenklager ausgeführt ist und je einen hier als Rohr dargestellten Träger 4 aufnimmt. Am radseitigen Ende jedes Trägers 4 ist ein ein Rad 1 tragender Längslenker 2 über eine Lagerung 48 um eine Achse 10 drehbar gehalten.

Die Radlast am Rad 1 wird vom Längslenker 2 über die Federung 5 auf einen Hebel 15 übertragen, der an jedem Träger 4 radial absteht. Dieser Hebel 15 nimmt die jeweilige Radlast auf und stützt sich gegen einen Zylinder 17l bzw. 17r der ersten Stelleinrichtung 9 ab, der wiederum bei 56 über einen Lagerbock 65 beweglich an dem zugehörigen Längsträger 6 festgelegt ist. Durch Fluidzu- und -Abfuhr über Anschlüsse 54l bzw. 54r ist jeder Zylinder 17r,l aktiv bzw. unter der Wirkung der Radlast längenverstellbar.

Die Federung 5 kann grundsätzlich, wie bei der DE 35 35 589 C1, als Tragfeder in den Trägern 4 eine Drehstab- oder Gummi- Drehschub- Feder und zwischen jedem Längslenker 2 und Hebel 15 einen Schwingungs- oder Stoßdämpfer enthalten, was jedoch nicht dargestellt ist.

Nach Fig. 1 ist die Federung 5 mit hydropneumatischen Federelementen 5a in Form von hydropneumatischen Federbeinen 23 ausgebildet, die über Anschlüsse 50l bzw. 50r in Verbindung mit einer nicht dargestellten, inneren Längenverstellung 23a verstellbar sind.

Über eine nicht weiter dargestellte Einrichtung kann der Bodenabstand des Chassis 7 über die Verstellung der hydropneumatischen Federbeine 23 bzw. der Zylinder 17r,l oder über beide Aggregate gemeinsam willkürlich z.B. von Hand eingestellt und das Chassis 7 unter seinem Eigengewicht gegebenenfalls bis zur Auflage auf der Fahrbahn 22 abgesenkt werden.

Eine seitenweise unabhängige Verstellung von Federbein 23 und/oder Zylinder 17 ermöglicht dabei die Ausrichtung des Chassis 7 gegen Fahrbahnunebenheiten etc., z.B. für Ladevorgänge.

Wenn ein preisgünstiges Einstiegsmodell eines erfindungsgemäß ausgerüsteten Fahrzeuges geschaffen werden soll oder wenn die durch die Verstellbarkeit der Federbeine 23 gegebenen Möglichkeiten der Lageregelung und der Absenkbarkeit des Chassis 7 für den vorgesehenen Einsatzbereich des Fahrzeuges ausreichen, kann die Stelleinrichtung 9 durch eine einfache starre Abstützung zwischen den Trägern 4 und dem Chassis 7 ersetzt werden.

Fig. 1a zeigt für diesen Fall z.B. die Anordnung einer in sich starren Strebe 9a zur Abstützung des Hebels 15, die die Einstellung der Träger 4 bei deren Verstellung nicht behindern. Diese Strebe 9a ist sinnvoll am Chassis 7 und am Hebel 15 auf die gleiche Weise und in den gleichen Lagerstellen angelenkt wie die Zylinder 17r,l der Stelleinrichtung 9 der Fig.1.

Damit ist später eine einfache Möglichkeit zur Nachrüstung einer aktiven Stelleinrichtung 9 gegeben.

Einen weiteren Vorteil bildet, daß die Länge der Strebe 9a auf konstruktiv einfache Weise für eine individuell gewünschte Basis- Höheneinstellung des Chassis 7 an die Gegebenheiten jedes Fahrzeuges anpaßbar ist.

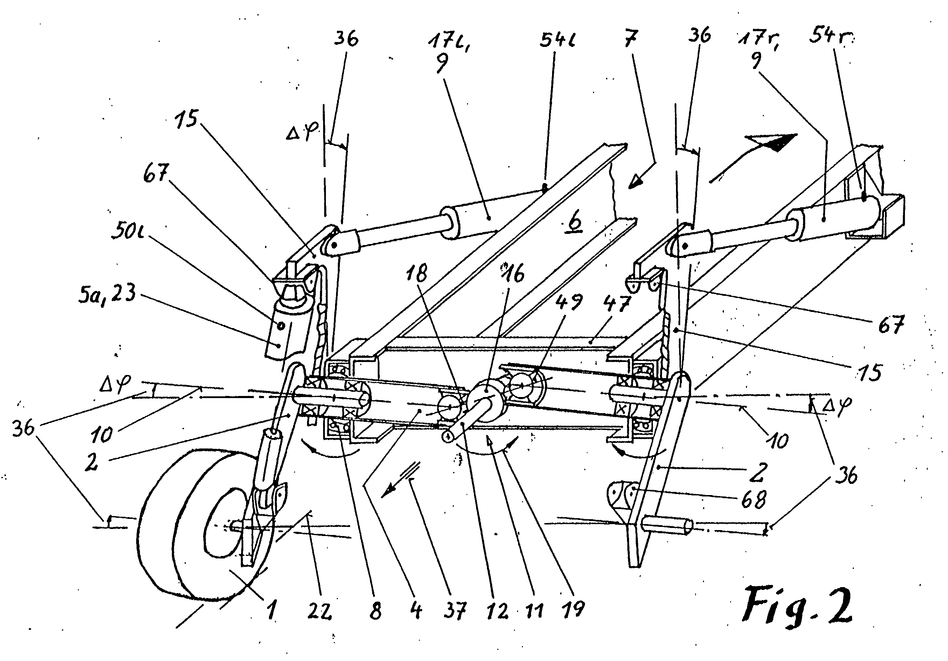

In die fahrzeugmittigen Enden der Träger 4 greifen, über Gleitschuhe 49 jeweils in Axial- und Umfangsrichtung sowie winklig beweglich, die Arme 18 eines Waagebalkens 16 ein. Der Waagebalken 16 ist über eine hier nur angedeutete Schwenkeinrichtung 11 mit Antrieb 19 um seine Schwenkachse 12 verschwenkbar, wie es in Fig.2 für den Fall einer Rechtkurve dargestellt ist.

Die Verschwenkung des Waagebalkens 16 um seine Schwenkachse 12 führt, wie in Fig.2 erkennbar, unter Verschiebung der Gleitschuhe 49 zu einer Schwenkbewegung der Träger 4 in ihren jeweiligen Lagern 8. Bei der dargestellten, horizontalen Ausrichtung der Schwenkachse 12 in der vertikalen Fahrzeug- Mittenebene ergibt sich hier eine in der Kurve stabilisierende Verstellung des Radsturzes beider Räder der Achsanordnung um einen Winkel (delta phi).

Bei senkrechter Ausrichtung der Schwenkachse 12 des Waagebalkens 16, die durch Verschwenkung der Schwenkeinrichtung 11 über eine Verschwenkeinrichtung 26 erreichbar ist, führt eine Schwenkbewegung des Waagebalkens 16 zu gemeinsamer Spuränderung der Räder 1 und damit zu reiner Lenkbewegung mit dem gleichen Winkel.

Die Ausrichtung der Schwenkachse 12 in Zwischenstellungen beiderseits der Horizontalstellung ergibt bei einer Schwenkbewegung anteilige Änderungen von Spur- bzw. Lenkwinkel und Radsturz in Verbindung mit unterschiedlichen Lenkrichtungen der Achsanordnung.

Eine Verschiebung der Schwenkeinrichtung 11 (insgesamt oder bei entsprechender Konstruktion auch radweise) in Fahrzeuglängsrichtung nach hinten über eine angedeutete Bremsstelleinrichtung 37 ergibt eine Änderung der Vorspur. Auf diese Weise kann etwa in einem Bremsvorgang durch Nutzung des Bremsdruckes - gegebenenfalls lastabhängig - die stabilisierende Vorspur erhöht oder im Hinblick auf Elastizitäten im System die Aufrechterhaltung von Vorspur sichergestellt werden.

Eine Darstellung des erfindungsgemäß mit einer Verstellung des Radsturzes über die Schwenkeinrichtung 11 einhergehenden Lageausgleichs am Chassis 7 ist in den Figuren 1 und 2 aus Gründen der Übersichtlichkeit unterblieben.

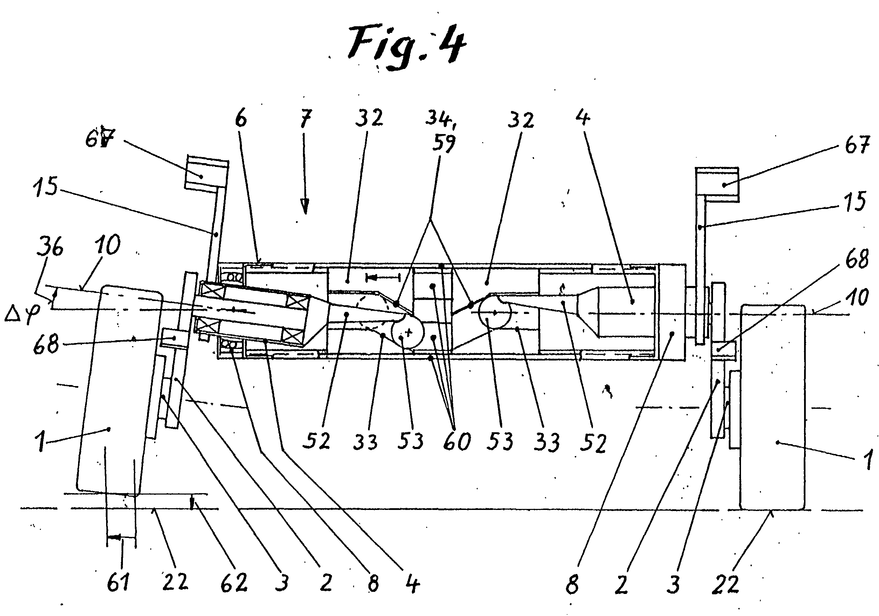

Einen Eindruck von der Größe der bei einer Sturzverstellung auszugleichenden Höhenänderung 62 vermittelt, wenn auch hinsichtlich der realen Schwenkmöglichkeiten des dargestellten Pendelkugellagers überzeichnet, die Fig.4.

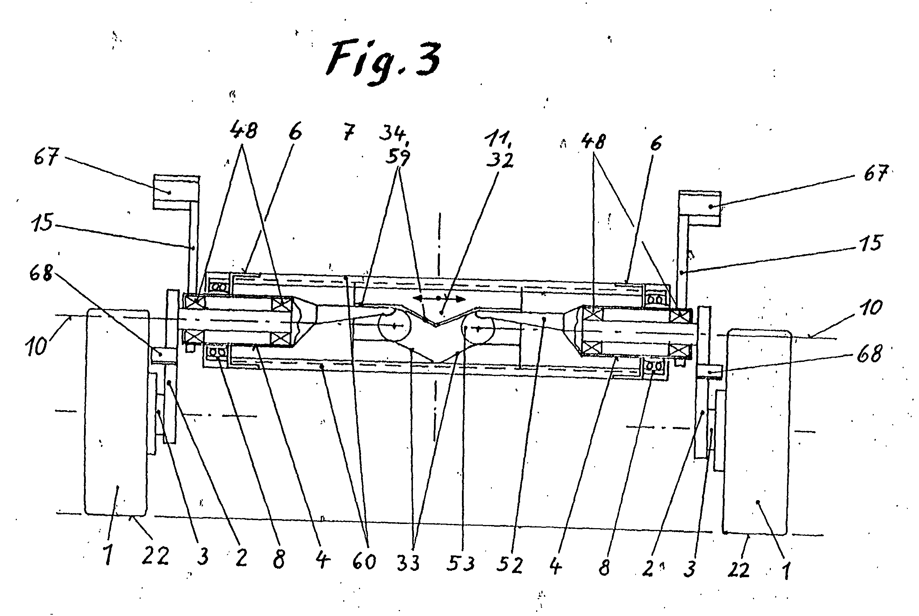

Fig.3 stellt eine Achsanordnung nach der Erfindung mit einseitiger Verstellung des Radsturzes über eine entsprechend ausgebildete, für beide Räder 1 bzw. Träger 4 gemeinsame Kulissenführung 33,34 mit einer Führungsbahn 33 und einer Rückenbahn 34 in einem für beide Träger 4 gemeinsamen Stellelement 32 vor. Ein Waagebalken ist als solcher konkret nicht definiert.

Die Träger 4 setzen sich hier außerhalb eines die Lagerung 48 des Längslenkers 2 aufnehmenden Rohrabschnittes in einem Arm 52 fort, der ein als Kugel 53 gezeichnetes Kugelelement trägt. Der Arm 52 greift dabei in Umfangsrichtung versetzt an der Kugel 53 an, um auch in der Radsturz- Verstellung ein Verschwenken des Trägers 4 über den Hebel 15 zur Höhenänderung des Chassis 7 über die Stelleinrichtung 9 (Zylinder 17) ohne Kollision in der Kulissenführung 33,34 zu ermöglichen.

Die Kugel 53 greift in die Kulisse 33,34 des Verstellelementes 32 ein und stützt sich unter der Radlast gegen die jeweilige Führungsbahn 33 ab. Die Rückenbahn 34 der Kulisse 33,34 ist normalerweise nicht belastet und kann zur präzisen Führung und zur Dämpfung von Vibrationenen an der Kugel 53 mit einem mit günstigen Gleiteigenschaften versehenen, elastisch dämpfenden Belag 59 ausgerüstet sein.

Das Stellelement 32 wird zur hier einseitigen Ein- und Verstellung des Radsturzes in tragenden Führungsschienen 60 zwischen den Längsträgem 6 des Chassis 7 in Fahrzeug- Querrichtung bewegt. Durch den dargestellten Verlauf der Kulissenführung 33,34 wird dabei jeweils der Sturz an einem (kurvenäußeren) Rad 1 verstellt und an dem anderen Rad 1 beibehalten.

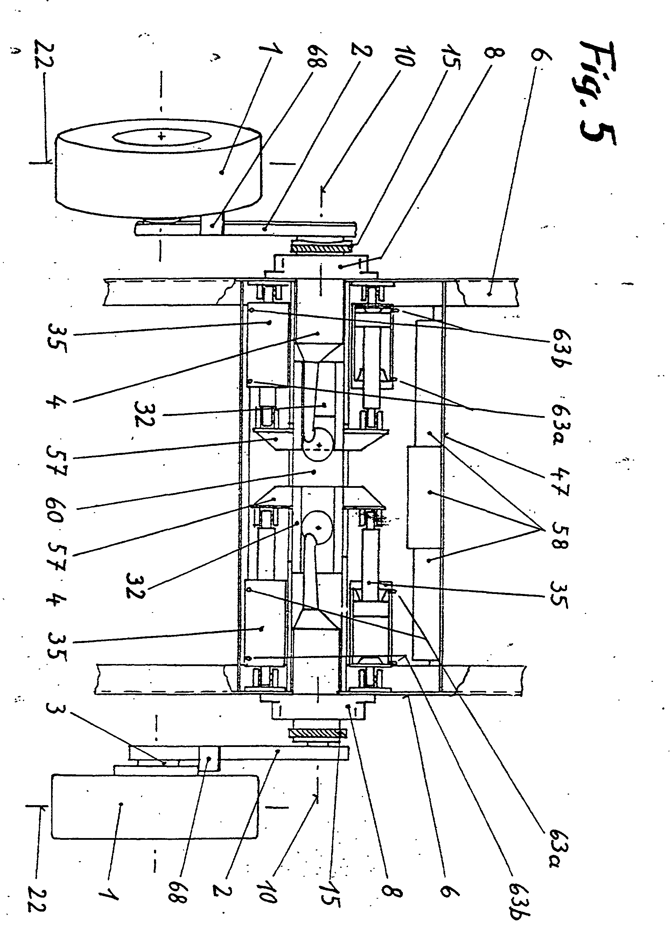

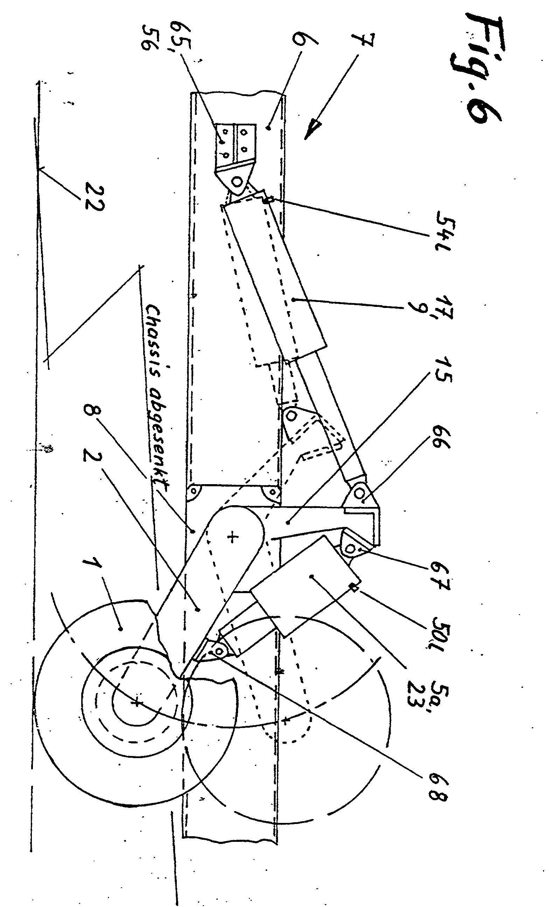

Fig.4 und Fig.5 zeigen in Ansicht und Draufsicht eine Ausführung der erfindungsgemäßen Achsanordnung mit Einzelverstellung der Träger 4 über Kulissenführungen 33,34 in jeweils separat jedem Rad 1 zugeordneten Stellelementen 32. Die stützenden Elemente der Radaufhängung - Federelemente 5a,23, Zylinder 17 - sind dabei zur besseren Übersicht weggelassen. Die Träger 4 sind wie bei Fig.3 mit an einem Arm 52 angeordneter Kugel 53 ausgebildet und, über die Kulisse 33,34 geführt, verschwenkbar.

Aufgrund der Geometrie der Achsanordnung ergibt sich hier wie auch grundsätzlich bei allen anderen Ausführungen zwangsläufig bei einer stützenden Sturzverstellung durch Verschwenken eines Trägers 4 eine ebenfalls stabilisierende einseitige Vergrößerung der Spurweite um den Betrag einer Spurweitenänderung 61.

Mit dieser günstigen Spurweitenänderung 61 geht jedoch eine geometrische Höhenänderung 62 des betroffenen Rades 1 gegenüber dem Chassis 7 einher. Da das Rad 1 unter der Radlast stets mit der Fahrbahn 22 Kontakt hat, wirkt diese Höhenänderung 62 als Absenkung des Chassis 7 und muß (zusätzlich zu der in der Kurvenfahrt unter der Fliehkraft bzw. Querbeschleunigung und der durch die Stützpunktverlagerung aufgrund der Spurweitenänderung belastungsabhängig größeren Einfederung an dieser Stelle) durch entsprechende Verstellung der hydropneumatischen Federelemente (5a; 23, Fig.1) und/oder der Stelleinrichtung (9; Zylinder 17, Fig.1) ausgeglichen werden.

Fig.5 stellt, wiederum unter Weglassung der Stelleinrichtung 9 mit ihren Zylindern 17 sowie der hydropneumatischen Federbeine 23, eine Antriebsanordnung für die Stellelemente 32 der Schwenkeinrichtung 11 aus der Fig.4 dar. Die Verstellung des Radsturzes betrifft nur das linke Rad 1, während das rechte Rad 1 in horizontaler Ausrichtung verbleibt.

Die in oberen und unteren Führungsschienen 60 geführten Stellelemente 32 mit ihren Kulissenführungen 33,34 sind jeweils über an einem Querjoch 57 angreifende, sich gegen den Längsträger 6 abstützende Zylinder als Stellelement 35 verschiebbar.

Die Stellzylinder 35 sind zweiseitig wirksam und werden jeweils durch Fluidbeaufschlagung an Anschlüssen 63a und 63b verstellt.

Wenn eine Verstellung nur zwischen den Endstellungen vorgesehen ist, was eine besonders einfache Struktur der Betätigung ergibt, können die Stellzylinder 35 auch pneumatisch betätigt werden, was sich aufgrund der Elastizität von Gasen sonst verbietet. Mit einer hydraulischen Verstellung können dagegen so hohe Steifigkeiten erreicht werden, daß auch Zwischenstellungen einstellbar sind.

Die zugehörigen Steuerelemente 58 können an einem Querträger 47 in dem geschützten Raum zwischen den Längsträgern 6 angeordnet sein, so daß sich kurze Strömungswege und damit eine steife, präzise Verstellung ergeben.

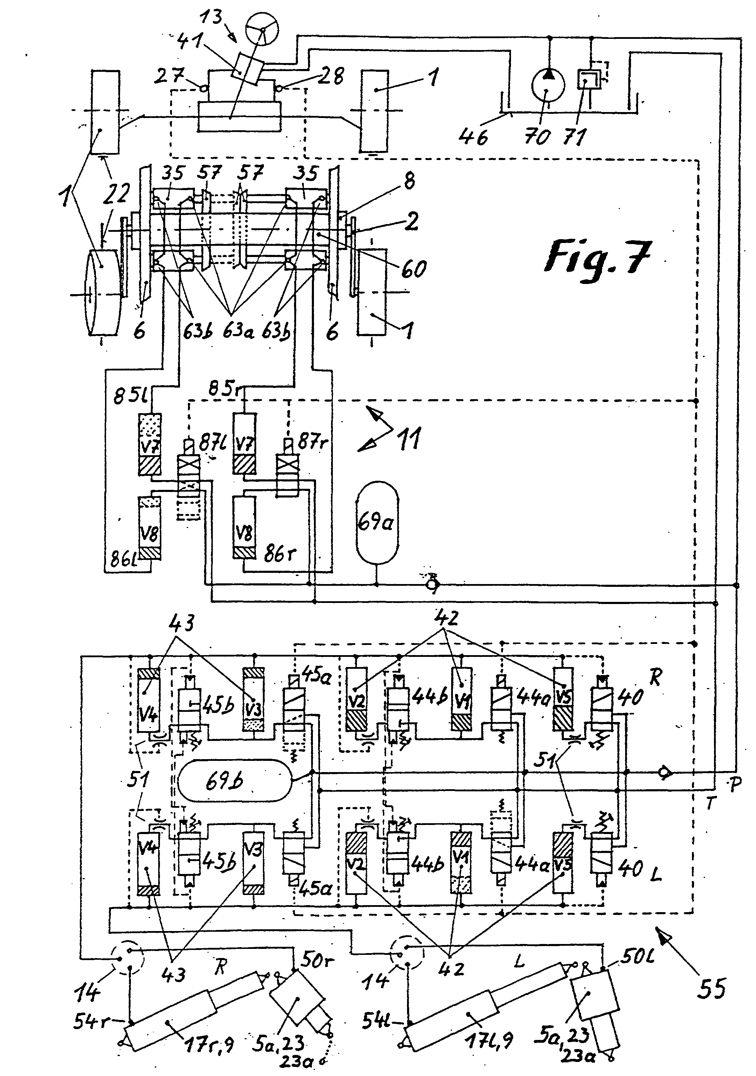

Die Fig.6 zeigt die Achsanordnung in ihrer Zuordnung zu dem Längsträger 6 des Chassis 7 in Fahrtstellung und - gestrichelt dargestellt - in abgesenkter Stellung des Chassis 7.

Der Zylinder 17 mit seinem Anschluß 54l ist mit einem Lagerbock 65 bei 56 am Längsträger 6 schwenkbar befestigt und arbeitet gegen einen Lagerbock 66 am Hebel 15, um an diesem die Radlast abzustützen oder ihn zur Lageänderung des Chassis zu verstellen.

In der gezeigten Darstellung wird die Absenkung des Chassis allein durch Einfahren des Zylinders 17 unter der Radlast und ohne einen Beitrag des hydropneumatischen Federelementes 5a;23 erreicht, das über Lagerböcke 67 und 68 am Hebel 15 und am Längslenker 2 die Radlast vom Längslenker 2 auf den Hebel 15 überträgt.

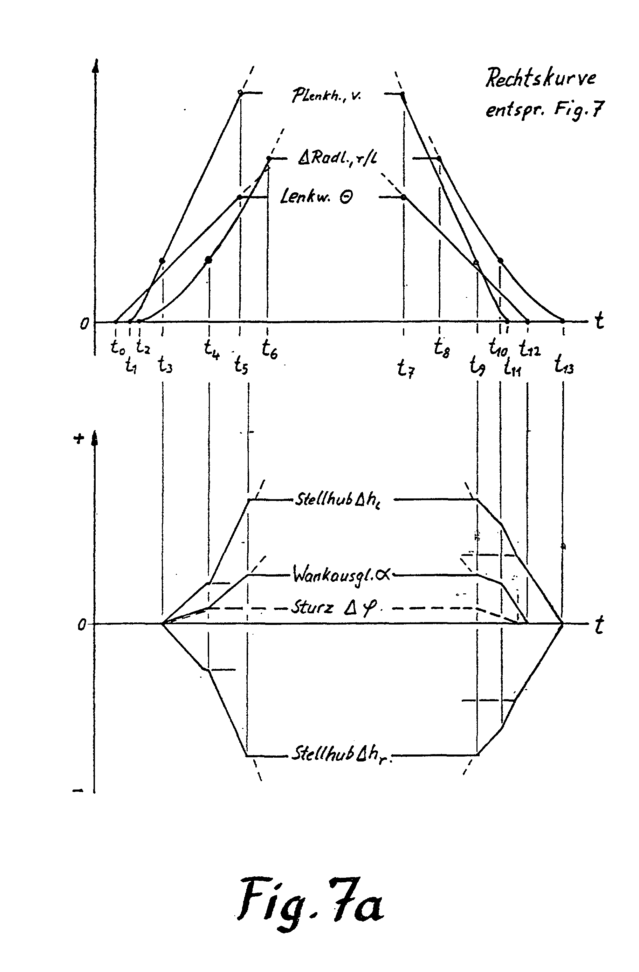

Die Achsanordnung nach den Fig.4 und 5 kann im Rahmen eines Hydrauliksystems entsprechend Fig.7 betrieben werden, das die Einstellung in einer Rechtskurve bei geringer Beladung zeigt.

Die relevanten Parameter haben dann etwa den in der Fig.7a dargestellten Verlauf.

Die Fig.7 zeigt ein System für ein Fahrzeug mit Hilfskraftlenkung 13 an der Vorderachse und einer Achsanordnung nach der Erfindung als hydraulisch verstellte Hinterachse mit einseitiger Sturzverstellung über Stellelemente 32, sowie Lagesteuerung.

Die Lagesteuerung erfolgt über die Stelleinrichtung 9 mit ihren Zylindern 17r,l und/oder über die verstellbaren hydropneumatischen Federbeine 5a,23 mit hydraulischer Längenverstellung 23a.

Zur Vereinfachung der Darstellung ist für die Lagesteuerung nur ein (!) hydraulisches Stellsystem 55 dargestellt, das - wie die markierte Stelle 14 andeutet - an den Zylindern 17r,l der Stelleinrichtung 9 oder - prinzipiell in gleicher Weise - auf die Längenverstellung 23a der Federelemente 5a,23 wirken kann und somit für die obige "oder"- Bedingung steht. Für die Realisierung der obigen "und"- Bedingung müßte ein in prinzipiell gleicher Weise aufgebautes weiteres Stellsystem "55" vorgesehen werden.

Das System der Fig.7 ist in üblicher Weise durch ein Überdruckventil 71 gesichert und erzeugt hydraulische Stellenergie über eine entsprechend ausgelegte Pumpe 70, die Fluid aus einem drucklosen Tank 46 entnimmt und den Teilsystemen über Rückschlagventile und verstetigende Druckspeicher 69a und 69b zuführt.

Die Pumpe 70 beaufschlagt über ein bei einer Lenkbetätigung gesteuertes Ventil 41 die Lenkung 13 mit hydraulischer Hilfskraft, deren vom Rückstellmoment der Lenkung abhängige Größe - Lenkhilfsdruck p_{Lenkh,v}, Fig.7a - durch Sensoren 27 und 28 für jede Lenkrichtung erfaßt und als Steuersignal verwendet wird.

Nach Fig.7 werden als Sensoren 27,28 und gleichzeitig als Signalgeber Druckschalter verwendet, die ein elektrisches Signal erzeugen, sobald der Hilfsdruck zur Überwindung der Lenkreaktion (d.h. des Rückstellmomentes aus Seitenkraft und Nachlauf des Rades) eine vorgegebene Schaltschwelle erreicht.

In gleicher Weise könnte der Lenkhilfsdruck selbst abgegriffen und als Signal weiterverwendet werden, was aber größeren Aufwand für die Signalführung über Druckleitungen erfordert.

Die Signale werden über gestrichelt dargestellte Steuerleitungen weitergeleitet und steuern einerseits Ventile 87r,l zur Sturzverstellung über die Stellelemente 32 der Schwenkeinrichtung 11 und andererseits das Stellsystem 55 für den Lageausgleich.

Für den vorliegenden Fall einer Rechtskurve erzeugt der Lenkhilfsdruck zum Zeitpunkt t3, Fig.7a, z.B. ein Signal am Sensor 27, während der Sensor 28 kein Signal abgibt.

Das Signal steuert in der Schwenkeinrichtung 11 das Ventil 87l an, worauf der Druckübersetzer 85l durch Einspeisen seines Teilvolumens V7 in die Zylinder des angeschlossenen Stellelementes 35 deren Kolben einfährt und dabei unter Verschwenkung des linken Trägers 4 über die Kulissenführung 33,34 des Stellelementes 32 (vgl Fig.4) den Sturz des linken Rades 1 stützend nach außen verstellt.

Das durch die Kolben im Stellelement 35 verdrängte (größere) Teilvolumen V8 wird drucklos im Druckübersetzer 86l aufgenommen. Die zugehörigen Kolbenstellungen in den Druckübersetzern 85l,86l und die Schaltstellung des Ventils 87l sind in Fig.7 gestrichelt und punktiert dargestellt.

Das Signal von der Lenkung 13 beaufschlagt gleichzeitig Ventile 44a und 45a im Stellsystem 55, das hier für eine lenkungsgesteuerte und nur eine von der Radlastdifferenz gesteuerte Augleichsstufe eingerichtet ist.

Durch das angesteuerte Ventil 44a wird der angeschlossene Druckübersetzer 42 mit dem Druck der Druckleitung P beaufschlagt und speist sein Teilvolumen V1 in den Zylinder 17l der Stelleinrichtung 9 bzw. in die Längenverstellung 23a des linken hydropneumatischen Federelementes 5a,23ein. Damit wird das Chassis 7 auf seiner linken Seite angehoben.

Gleichzeitig schaltet das Ventil 45a der rechten Seite den angeschlossenen Druckübersetzer 43 von der Druckleitung P auf die Leitung T zum drucklosen Tank um. Als Folge verschiebt der von der Radlast erzeugte Druck am rechten Zylinder 17r der Stelleinrichtung 9 bzw. an der im Kraftfluß liegenden Längenverstellung 23a des hydropneumatischen Federelementes 5a,23 den Trennkolben des Druckübersetzers 43 unter Entnahme seines Teilvolumens V3 aus dem Zylinder 17r bzw. der rechten Längenverstellung 23a. Damit wird das Chassis 7 auf seiner rechten Seite zeitgleich abgesenkt.

Insgesamt erfolgt so eine Kompensation der geometrisch durch die Sturzverstellung am linken Rad bedingten Absenkung sowie im Hinblick auf eine Querbeschleunigung in der gerade begonnenen Kurve ein Wankausgleich (alpha) z.B. unter Beibehaltung der mittleren Höhenlage des Chassis 7.

Dieser Teil der Steuerung wird bei der Darstellung Fig.7a zum Zeitpunkt t4 um einen von der - fliehkraftbedingten - Radlastdifferenz abhängigen weiteren Wankausgleich (alpha) ergänzt, denn das Stellsystem 55 der Fig.7 erlaubt in weiteren Stufen den Wankausgleich bzw. die Lageverstellung des Chassis 7 als Reaktion auf kurvenbedingte Radlaständerungen.

Der Einfachheit halber sieht die Fig.7 lediglich eine einzige solche Stufe mit Ventilen 44b und 45b sowie entsprechend ausgelegten Druckübersetzern 42 und 43 vor.

Die Radlaständerungen an der Hinterachse treten zur Zeit t2 und damit gegenüber dem zur Zeit t1 einsetzenden Lenkhilfsdruck an der Vorderachse mit Zeitverzug auf, da sie eine durch die Fahrzeugmasse bedingte und verzögerte Folge der zum Zeitpunkt t0 beginnenden Lenkbetätigung bzw. der zum Zeitpunkt t1 einsetzenden Seitenkraft zur Fahrtrichtungsänderung sind. Dementsprechend sind die Ventile 44b und 45b zu den von der Lenkung 13 direkt gesteuerten Ventilen 44a und 45a (und von deren Ansteuerung abhängig) in Serie geschaltet und von der Differenz der Radlasten bzw. der radlastabhängigen Drücke in den rechten und linken Zylindern 17r und 17l der Stelleinrichtung 9 bzw. den zugehörigen Federelementen 5a,23 gesteuert. Die Ventile 44b und 45b können also nur nach dem Auftreten eines Signals von der Lenkung 13 wirksam schalten, frühestens - bei einem scharfen Lenkeinschlag - ganz kurz nach diesen.

In der Darstellung Fig.7a überwindet die kurvenbedingte Radlast- Differenz zum Zeitpunkt t4 die auf einen definierten Wert eingestellte Vorspannkraft der Feder am Ventil 44b und schaltet die Druckleitung P auf den Druckübersetzer mit dem Teilvolumen V2 weiter.

In Relation dazu - zB. gleichzeitig oder bei einem nahen Wert der Radlast- Differenz - steuert das Ventil 45b des Druckübersetzers 43 mit dem Teilvolumen V4 um und schaltet auch diesen auf den drucklosen Tank weiter.

Als Folge wird, beginnend zum Zeitpunkt t4, das Teilvolumen V2 auf der linken Seite eingespeist und hebt die linke Seite an, während durch Entnahme des Teilvolumens V4 aus der rechten Seite diese abgesenkt wird.

Zumindest den nachgesteuerten Druckübersetzern 42/V2, 43/V4 sind jeweils Drosselanordnungen 51 zugeordnet. Diese können - etwa wie in Fig.7 dargestellt - abhängig von der Radlast vorgesteuert sein und bewirken auf diese Weise sanfte Übergänge und Anschlüsse im Verlauf der Lagesteuerung des Chassis 7.

Beim Rücklenken aus der Kurve kann die Rücksteuerung der Ventile mit den angeschlossenen Druckübersetzern beispielsweise bei den gleichen Schaltschwellen erfolgen. Damit ergibt sich für den Kurvenauslauf ein Verlauf der Stellgrößen, wie er sich in Fig.7a mit dem Erreichen der Schaltschwellen der Radlastdifferenz und des Lenkhilfsdruckes zum Zeitpunkt t9 bzw. t10 darstellt.

Die unterschiedlichen Teilvolumina V1 und V2 bzw. V3 und V4 der nacheinander angesteuerten Druckübersetzer 42 und 43 tragen mit ihrer unterschiedlichen Größe der nichtlinearen, progressiven Federkennlinie der hydropneumatischen Federelemente 5a,23 Rechnung. Durch Wahl der Größe der schaltenden Radlaständerung und der Teilvolumina kann neben der Größe der Fahrzeugneigung gegen die Querbeschleunigung in der Kurvenfahrt auch gleichzeitig (in Fig.7a nicht dargestellt) als weiteres Sicherheitselement die Höhenlage des Chassis 7 an der Hinterachse verändert, d.h. verringert werden.

Wie in Fig 7 angedeutet, können für die Druckübersetzer 42 und 43 - z.B. in Baueinheit mit wesentlichen Teilen der zugehörigen Ventile und Drosseleinrichtungen - Gleichteile verwendet werden, um bereits bei geringen, mit der Achsanordnung nach der Erfindung auszurüstenden Fahrzeug- Losgrößen eine rationelle Serienfertigung dieser hydraulischen Komponenten zu erlauben. Unterschiedliche Teilvolumina der Druckübersetzer lassen sich dabei durch unterschiedliche Größe etwa eines hohl gebauten Trennkolbens realisieren.

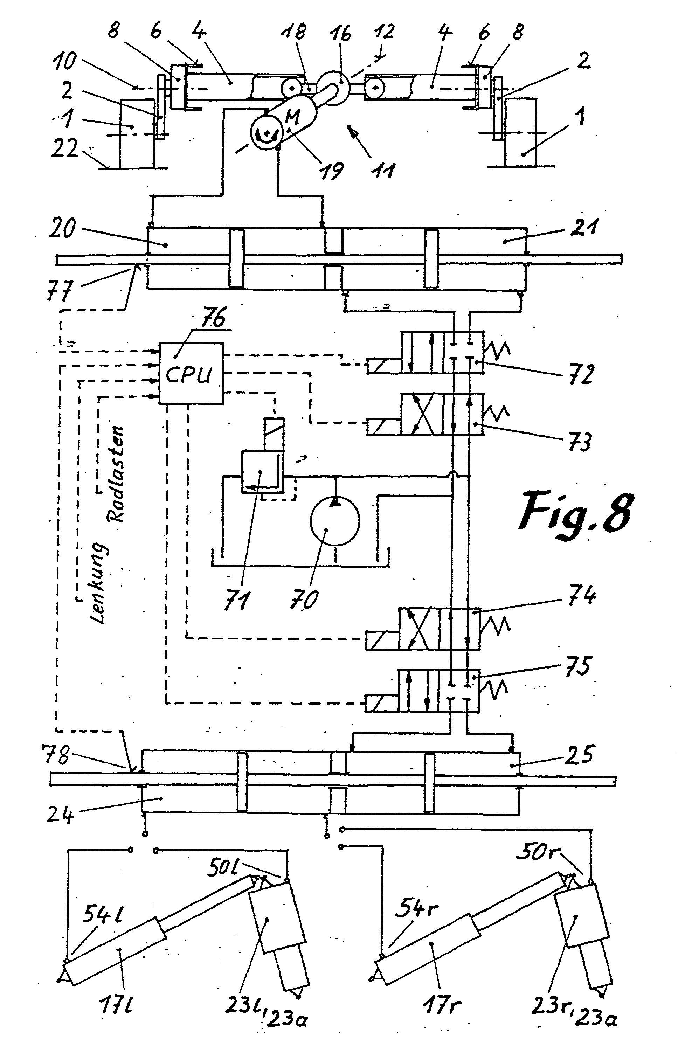

Die Fig.8 zeigt ein System zur geregelten hydraulischen Verstellung des Radsturzes über eine Stelleinheit 11 mit einem Waagebalken 16, der über einen Hydromotor als Antrieb 19 verstellt wird, sowie der Lage des Chassis 7 über die Zylinder 17r,l der Stelleinrichtung 9 oder die Längenverstellung 23a hydropneumatischer Federbeine 23r,l.

Hierzu werden Signale der Lenkung und der Radbelastungen in einer Zentraleinheit CPU 76 nach vorgegebenen Algorithmen zu Steuersignalen für die Ansteuerung von Ventilen 72,73,74 und 75 sowie eines gesteuerten Druckhalteventiles 71 an der Pumpe 70 verarbeitet, mit dem der Druck im System verändert werden kann.

Durch die Ventile 72,73 und 74,75 wird Fluid unter Druck - kontinuierlich oder getaktet - Gleichgang- Zylindern 21 bzw. 25 zugeführt, die ihrerseits Gleichgang-Zylinder 20 bzw. 24 antreiben. Durch richtungsrichtige Zufuhr zu und gleichzeitige Entnahme gleich großer Teilvolumina aus den angeschlossenen Stellelementen wird so die gewünschte gegensinnige Stellbewegung erreicht, deren Verlauf über Sensoren 77 bzw. 78 für den Verschiebeweg der Gleichgang- Zylinder 20 bzw. 24 an die Regelung in der Zentraleinheit 76 rückgemeldet wird.

## Patentansprüche

1. Verstellbare Achsanordnung für ein Fahrzeug, mit den folgenden Merkmalen:
- die Achsanordnung trägt zwei jeweils über einen Längslenker (2) geführte Räder (1);
- jeder Längslenker (2) ist über eine Lagerung (48) in einem im Chassis (7) quer zur Fahrtrichtung angeordneten Träger (4) gelagert und geführt und über eine Federung (5;5a;23) gegen den Träger (4) abgestützt ;
- jeder Träger (4) ist über eine Lagerung (8) an einem Längsträger (6) des Chassis (7) radial und axial fest, aber drehbar und außerdem in der Lagerung (8) über eine Schwenkeinrichtung (11) gegenüber den jeweiligen Längsträgern (6) verschwenkbar gelagert, wobei jeder Träger (4) gegenüber dem Chassis (7) in seiner Umfangsrichtung abgestützt ist ;
- wobei die Schwenkeinrichtung (11) zumindest einen der beiden Träger (4) in seiner Lagerung (8) verschwenkt, um je nach Ausrichtung seiner Schwenkachse in einer vertikalen Fahrzeug- Längsebene für jedes betroffene Rad (1) eine Änderung (36) des Radsturzes oder eine Änderung des Spurwinkels oder eine Kombination von Komponenten beider Bewegungen zu erzeugen ;
- die Federung (5;5a;23) gegenüber dem Träger (4) und/oder die Abstützung (15,9) des Trägers (4) gegen das Chassis ist bzw. sind verstellbar, um einer durch die Geometrie der Achsanordnung im Chassis (7) bei einer Schwenkbewegung der Träger (4) und einer aufgrund einer Querbeschleunigung bei Kurvenfahrt anstehenden Lageänderung des Chassis (7) entgegenzuwirken ;
- die Schwenkeinrichtung (11) und die Federung (5;5a;23) und/oder die Stelleinrichtung (9) sind durch Stellelemente (32;19;40;42;43) verstellbar, die über Signale bei bzw. als Folge z.B. einer Lenkbetätigung (Lenkung 13) angesteuert werden ;
- wobei die Stellenergie für die Verstellung der Schwenkeinrichtung (11) sowie der Federung (5; 5a;23) und oder der Stelleinrichtung (9) einem entsprechend ausgelegten hydraulischen (z.B. Lenkhilfspumpe und Druckspeicher) und oder pneumatischen (z.B. Kompressor und Druckbehälter) und/oder elektrischen (z.B. Lichtmaschine und Batterie) Bordnetz des Fahrzeuges entnommen wird.

2. Achsanordnung nach Anspruch 1, **dadurch gekennzeichnet, daß** die Schwenkeinrichtung (11) als in der vertikalen Mittelebene des Chassis (7) gelagerter Waagebalken (16) ausgebildet ist, dessen Arme (18) mit ihren seitlichen Enden, axial und in Umfangsrichtung beweglich, mit den zugehörigen Enden der Träger (4) gekoppelt sind, wobei der Waagebalken (16) zur Winkelverstellung seiner Arme (18) über einen Antrieb (19) um seine Schwenkachse (12) verstellbar ist.

3. Achsanordnung nach Anspruch 1, **dadurch gekennzeichnet, daß** die Schwenkeinrichtung (11) an jedem Träger (4) angreifende. einzeln oder insgesamt durch die Schwenkeinrichtung (11) verstellbar bewegliche Stellelemente (32) umfaßt, die für jeden Träger (4) eine Führungsbahn (33) umfassen und durch ihre Ausrichtung für jeden Träger (4) eine Schwenkachse ausbilden.

4. Achsanordnung nach Anspruch 3, **dadurch gekennzeichnet, daß** jedem Träger (4) ein einzeln verstellbares Stellelement (32) zugeordnet ist.

5. Achsanordnung nach Anspruch 3, **dadurch gekennzeichnet, daß** die Führungsbahn (33) zumindest einen nicht linearen Abschnitt umfaßt.

6. Achsanordnung nach Anspruch 3, dädurch gekennzeichnet, daß jede Führungsbahn (33) als Kulissenführung ausgebildet ist.

7. Achsanordnung nach Anspruch 6, **dadurch gekennzeichnet, daß** die bei vollständiger Entlastung eines Rades (1) zum Tragen kommende Rückenbahn (34) der Kulissenführung (33,34) mit einem elastischen und dämpfenden Belag (29) versehen ist.

8. Achsanordnung nach Anspruch 1, **dadurch gekennzeichnet, daß** die erste Stelleinrichtung (9) auf jedem Träger (4) eine Verzahnung umfaßt, die mit einem verzahnten Antriebselement (z.B. Zahnstange, Ritzel) zusammenwirkt, das von einem gegen das Chassis (7) abgestützten Antrieb beaufschlagbar ist.

9. Achsanordnung nach Anspruch 1, **dadurch gekennzeichnet, daß** die Stelleinrichtung (9) als längenveränderliche Stelleinheit ausgebildet ist, die auf einen radialen Hebel (15) am Träger (4) wirkt und diesen verstellbar gegen das Chassis (7) abstützt.

10. Achsanordnung nach Anspruch 9, **dadurch gekennzeichnet, daß** die Stelleinheit für jedes Rad (1) als hydraulischer Zylinder (17) ausgebildet ist.

11. Achsanordnung nach Anspruch I, **dadurch gekennzeichnet. daß** die Federung (5) allein oder zusätzlich zu mechanischen oder Gummi- Federn Federelemente (5a) umfaßt, die hinsichtlich ihrer Federsteifigkeit und/oder ihrer Dämpfung und/oder ihrer Länge verstellbar sind.

12. Achsanordnung nach Anspruch 11, **dadurch gekennzeichnet, daß** die Federelemente (5a) pneumatische oder hydropneumatische Federbeine (23) sind.

13. Achsanordnung nach Anspruch 9 und 11 oder12, **dadurch gekennzeichnet, daß** die Federelemente (5a: 23) für jedes Rad (1) zwischen dessen Längslenker (2) und dem am Träger (4) angeordneten und über die Stelleinheit (9; Zylinder 17) abgestützten Hebel (15) wirken.

14. Achsanordnung nach den Ansprüchen 1, 2 oder 3, **dadurch gekennzeichnet, daß** die Schwenkeinrichtung (11) und die Federung(5;5a;23) und/oder die Stelleinrichtung (9;17) zur Verstellung hydraulische Stellelemente (35;23a;17) verwenden.

15. Achsanordnung nach Anspruch 14, **dadurch gekennzeichnet, daß** in der Lageregelung des Chassis (7) das federnde Volumen des Federelementes (5a; 23) der in einer Kurve entlasteten Seite der Achsanordnung aktiv vergrößert und das der in der Kurve belasteten Seite aktiv verringert wird.

16. Achsanordnung nach Anspruch 14, **dadurch gekennzeichnet, daß** die hydraulischen Stellelemente (35;23a;17) jeweils durch zumindest einen Druckübersetzer (42; 43;85r,l;86r,l) verstellt werden, der über zumindest ein Ventil (41;44a,b;45a,b;87r,l) beaufschlagt wird, das mit dem Erreichen eines Schaltwertes bei bzw. als Folge einer Lenkbetätigung angesteuert wird und dem zugehörigen Stellelement (35) ein definiertes Teilvolumen zuführt oder entnimmt.

17. Achsanordnung nach Anspruch 16, **dadurch gekennzeichnet, daß** mehrere Druckübersetzer (42;43;85r;l;86r,l) vorgesehen sind, deren Teilvolumina eine gewünschte Stell- Kennlinie annähern und die radlastabhängig nacheinander oder in der Ansteuerung zeitlich überlappend betätigt werden.

18. Achsanordnung nach Anspruch 17, **dadurch gekennzeichnet, daß** die Stell-Kennlinie die Wirkung des Polytropen- Exponenten des federnden Gases berücksichtigt.

19. Achsanordnung nach Anspruch 16, **dadurch gekennzeichnet, daß** zur Darstellung eines Verstellungs- Zeit- Verhaltens in die Fluidführung der Druckübersetzer (42:43;85r,l:86r.l;87r,l) eine Drosselanordnung mit festen und/oder abhängig von der Radlast und/oder einem Lenkungsparameter verstellbaren Drosseln (51) eingebaut ist.

20. Achsanordnung nach Anspruch 16, **dadurch gekennzeichnet, daß** die Lenkung (13) als Hilfskraftlenkung ausgebildet ist und daß zur Ansteuerung der von der Lenkung (13) gesteuerten Ventile (44a;45a) dieGröße der einer bestimmten Reaktion an der Lenkung (13) entsprechenden Hilfskraft herangezogen wird.

21. Achsanordnung nach Anspruch 16, **dadurch gekennzeichnet, daß** zur Ansteuerung der lenkungsabhängig gesteuerten Ventile (44a:45a) die Größe der Betätigungsgeschwindigkeit der Lenkung(13) herangezogen wird.

22. Achsanordnung nach Anspruch 20, **dadurch gekennzeichnet, daß** in der Folge zur Ansteuerung der radlastabhängigen Ventile (44b;45b) die Größe einer bestimmten, nach einer Lenkbetätigung auftretenden Laständerung (Druckänderung, Ein/Ausfederung) verwendet wird.

23. Achsanordnung nach Anspruch 14, **dadurch gekennzeichnet, daß** zumindest ein Teil der hydraulischen Stellelemente (35;23a;17;19) über eine Gleichgang-Zylinderanordnung (20;24) verstellt wird, die einem angeschlossenen Stellelement ein Teilvolumen entnimmt und dem korrespondierenden Stellelement ein gleich großes Teilvolumen zuführt, und umgekehrt.

24. Achsanordnung nach Anspruch 1, **dadurch gekennzeichnet, daß** die Schwenkeinrichtung (11) zumindest für einen der Träger (4) durch eine Verschwenkeinrichtung (26) um eine Fahrzeug- Querachse verschwenkbar und in ihrer Winkellage zur Ebene des Chassis (7) einstellbar ist, um in vom Verschwenkwinkel abhängigen Anteilen eine Änderung des Radsturzes und eines Spurwinkels jedes angesprochenen Rades (1) zu erzeugen.

25. Achsanordnung nach Anspruch 1, **dadurch gekennzeichnet, daß** zur Einstellung und Änderung der Vorspur der Räder (1) die Schwenkeinrichtung (11) mit den inneren Enden für jeden Träger (4) einzeln oder insgesamt durch eine Bremsstelleinrichtung (37) in Fahrzeuglängsrichtung verstellbar und zumindest bei einer Betätigung der Radbremsen wirksam ist, um durch Einstellen von Vorspur die Fahr- und Bremsstabilität des Fahrzeuges zu erhöhen.

26. Achsanordnung nach Anspruch 1 und/oder 24 und/oder 25, **dadurch gekennzeichnet, daß** Träger (4), Schwenkeinrichtung (11; Stellelemente 32 bzw. Waagebalken 16) sowie gegebenenfalls Stelleinrichtung (9;17) und oder Verschwenkeinrichtung (26) und/oder Bremsstelleinrichtung (37) mit den zugehörigen Schaltelementen (Ventil 41;42a;43a; Druckübersetzer 40;42;43) und der Energiezuführung innerhalb des Chassis (7) in einem Raum geschützt untergebracht und abgestützt sind, der durch die Längsträger (6) und in Fahrtrichtung vor und hinter der Achsanordnung angeordnete Querträger (47) sowie zumindest untere Abdeckungen gebildet ist.

27. Achsanordnung nach einem oder mehreren der vorangehenden Ansprüche, **dadurch gekennzeichnet, daß** eine Verstellung der verstellbaren Elemente (9:11:5:5a:26) unter Zuführung von Stellenergie in beiden Stellrichtungen oder nur in der gegen die Radlastwirkung gerichteten Stellrichtung aktiv gesteuert erfolgt, wobei dann in der anderen Richtung die Stellenergie aus der Radlastwirkung selbst gewonnen wird.

## Claims

1. Adjustable axle arrangement for a vehicle, having the following features:
- the axle arrangement supports two wheels (1) each guided via a longitudinal control arm (2);
- each longitudinal control arm (2) is mounted and guided via a mounting (48) in a support (4) arranged transversely with respect to the direction of travel in the chassis (7), and is supported with respect to the support (4) via a suspension system (5; 5a; 23);
- each support (4) is mounted via a mounting (8) on a longitudinal member (6) of the chassis (7) in a radially and axially fixed, but rotatable manner and, in addition, is mounted in the mounting (8) in a manner such that it can be pivoted with respect to the respective longitudinal members (6) via a pivoting device (11), each support (4) being supported with respect to the chassis (7) in its circumferential direction;
- the pivoting device (11) pivoting at least one of the two supports (4) in its mounting (8) in order, depending on the alignment of its pivot axis in a vertical longitudinal plane of the vehicle, to produce, for each wheel concerned (1), a change (36) in the wheel camber or a change in the toe angle or a combination of components of both movements;
- the suspension system (5; 5a; 23) can be adjusted with respect to the support (4) and/or the means (15, 9) of supporting the support (4) can be adjusted with respect to the chassis in order to counteract a change in position of the chassis (7) which arises during a pivoting movement of the supports (4) due to the geometry of the axle arrangement in the chassis (7) and a change in position of the chassis (7) which arises due to a transverse acceleration during cornering;
- the pivoting device (11) and the suspension system (5; 5a; 23) and/or the adjusting device (9) can be adjusted by adjusting elements (32; 19; 40; 42; 43) which are activated via signals during or as a consequence of, for example, a steering operation (13);
- the adjustment energy for adjusting the pivoting device (11) and the suspension system (5; 5a; 23) and/or the adjusting device (9) being taken from an appropriately designed hydraulic (e.g. power-steering pump and pressure reservoir) and/or pneumatic (e.g. compressor and pressure tank) and/or electrical (e.g. generator and battery) power supply system of the vehicle.

2. Axle arrangement according to Claim 1, **characterized in that** the pivoting device (11) is designed as a balance arm (16) which is mounted in the vertical central plane of the chassis (7), the arms (18) of which are coupled at their lateral ends, in a manner such that they can move axially and in the circumferential direction, to the associated ends of the supports (4), it being possible for the balance arm (16) to be adjusted about its pivot axis (12) by means of a drive (19) in order to adjust the angle of its arms (18).

3. Axle arrangement according to Claim 1, **characterized in that** the pivoting device (11) comprises adjusting elements (32) which engage on each support (4), can be moved in a manner allowing them to be adjusted individually or together by the pivoting device (11), comprise a guide track (33) for each support (4) and, by means of their alignment, form a pivot axis for each support (4).

4. Axle arrangement according to Claim 3, **characterized in that** each support (4) is assigned an individually adjustable adjusting element (32).

5. Axle arrangement according to Claim 3, **characterized in that** the guide track (33) comprises at least one non-linear section.

6. Axle arrangement according to Claim 3, **characterized in that** each guide track (33) is designed as a slotted guide.

7. Axle arrangement according to Claim 6, **characterized in that** the rear track (34) of the slotted guide (33, 34) that is used when a wheel (1) is completely relieved of load is provided with an elastic and damping lining (29).

8. Axle arrangement according to Claim 1, **characterized in that** the first adjusting device (9) on each support (4) comprises a toothing which interacts with a toothed driving element (e.g. rack, pinion) which is acted upon by a drive supported with respect to the chassis (7).

9. Axle arrangement according to Claim 1, **characterized in that** the adjusting device (9) is designed as an adjusting unit which can be changed in length, acts on a radial lever (15) on the support (4) and .supports the latter in an adjustable manner with respect to the chassis (7).

10. Axle arrangement according to Claim 9, **characterized in that** the adjusting unit for each wheel (1) is designed as a hydraulic cylinder (17).

11. Axle arrangement according to Claim 1, **characterized in that** the suspension system (5) comprises, by itself or in addition to mechanical or rubber springs, spring elements (5a) which can be adjusted in respect of their spring stiffness and/or their damping and/or their length.

12. Axle arrangement according to Claim 11, **characterized in that** the spring elements (5a) are pneumatic or hydropneumatic spring struts (23).

13. Axle arrangement according to Claims 9 and 11 or 12, **characterized in that** the spring elements (5a; 23) for each wheel (1) act between the longitudinal control arm (2) of the latter and the lever (15) which is arranged on the support (4) and is supported by the adjusting unit (9; cylinder 17).

14. Axle arrangement according to Claim 1, 2 or 3, **characterized in that** the pivoting device (11) and the suspension system (5; 5a; 23) and/or the adjusting device (9; 17) use hydraulic adjusting elements (35; 23a; 17) for adjustment purposes.

15. Axle arrangement according to Claim 14, **characterized in that** in the positional control of the chassis (7) the resilient capacity of the spring element (5a; 23) on that side of the axle arrangement which is relieved of load in a curve is actively increased and that on the side which is loaded in the curve is actively reduced.

16. Axle arrangement according to Claim 14, **characterized in that** the hydraulic adjusting elements (35; 23a; 17) are in each case adjusted by at least one pressure converter (42; 43; 85r,l; 86r,l) which is acted upon via at least one valve (41; 44a,b; 45a,b; 87r,l) which is activated when a switching value is reached during or as a consequence of a steering operation and supplies or removes a defined partial volume to or from the associated adjusting element (35).

17. Axle arrangement according to Claim 16, **characterized in that** a plurality of pressure converters (42; 43; 85r,1; 86r,l) are provided, the partial volumes of which approximate a desired adjusting characteristic and which are actuated successively or with a time overlap in activation as a function of the wheel load.

18. Axle arrangement according to Claim 17, **characterized in that** the adjusting characteristic takes into account the action of the polytropic exponent of the spring-loaded gas.

19. Axle arrangement according to Claim 16, **characterized in that** to illustrate an adjustment/time behaviour, a throttle arrangement having throttles (51) which are fixed and/or can be adjusted as a function of the wheel load and/or a steering parameter is fitted into the liquid guide of the pressure converters (42; 43; 85r,l; 86r,l; 87r,l).

20. Axle arrangement according to Claim 16, **characterized in that** the steering system (13) is designed as a power-steering system, and **in that** the magnitude of the auxiliary power corresponding to a certain reaction in the steering system (13) is used to activate the valves (44a; 45a) which are controlled by the steering system (13).

21. Axle arrangement according to Claim 16, **characterized in that** the magnitude of the operating speed of the steering system (13) is used to activate the valves (44a; 45a) which are controlled as a function of the steering system.

22. Axle arrangement according to Claim 20, **characterized in that** consequently the magnitude of a certain change in load (change in pressure, compression/rebound) occurring after a steering operation is used to activate the valves (44b; 45b) which are dependent on the wheel load.

23. Axle arrangement according to Claim 14, **characterized in that** at least some of the hydraulic adjusting elements (35; 23a; 17; 19) are adjusted via an identically responding cylinder arrangement (20; 24) which removes a partial volume from a connected adjusting element and supplies a partial volume of the same size to the corresponding adjusting element, and vice versa.

24. Axle arrangement according to Claim 1, **characterized in that** the pivoting device (11) at least for one of the supports (4) can be swivelled by a swivelling device (26) about a transverse axis of the vehicle and can be set in its angular position with respect to the plane of the chassis (7) in order to produce a change in the wheel camber and a toe angle of each wheel (1) under discussion in amounts dependent on the swivelling angle.

25. Axle arrangement according to Claim 1, **characterized in that** in order to set and change the toe-in of the wheels (1), the pivoting device (11) can be adjusted at the inner ends in the longitudinal direction of the vehicle for each support (4) on its own or altogether by a brake adjusting device (37) and is effective at least when the wheel brakes are actuated, in order to increase the driving and braking stability of the vehicle by setting the toe-in.

26. Axle arrangement according to Claim 1 and/or 24 and/or 25, **characterized in that** the support (4), pivoting device (11; adjusting elements 32 and balance arm 16) and, if appropriate, adjusting device (9; 17) and/or swivelling device (26) and/or brake adjusting device (37) together with the associated switching elements (valve 41; 42a; 43a; pressure converters 40; 42; 43) and the power supply within the chassis (7) are accommodated and supported in a protected manner in a space which is formed by the longitudinal members (6) and transverse members (47), which are arranged upstream and downstream of the axle arrangement in the direction of travel, and by at least lower coverings.

27. Axle arrangement according to one or more of the preceding claims, **characterized in that** an adjustment of the adjustable elements (9; 11; 5; 5a; 26) takes place under active control by adjustment energy being supplied in both adjustment directions or only in the adjustment direction directed counter to the action of the wheel load, the adjustment energy then being obtained in the other direction from the action of the wheel load itself.

## Revendications

1. Ensemble de train de suspension réglable pour un véhicule ayant les caractéristiques suivantes :
- le train de suspension supporte deux roues directrices (1) guidées chacune par un bras oscillant longitudinal (2) ;
- chaque bras oscillant longitudinal (2) est porté et guidé, au moyen d'un logement (48), dans un support (4) de châssis (7), disposé perpendiculairement à la direction de déplacement et s'appuie contre le support (4) au moyen d'organes de suspension (5 ; 5a ; 23) ;
- chaque support (4) est fixé radialement et axialement, via un logement (8), à un support longitudinal (6) du châssis (7), mais peut pivoter et de plus, est suspendu à l'horizontale vis-à-vis des supports longitudinaux (6) correspondants, dans le logement (8), au moyen d'un dispositif articulé (11), moyennant quoi chaque support (4) s'appuie contre le châssis (7) dans sa direction circonférentielle ;
- moyennant quoi le dispositif articulé (11) fait pivoter au moins un des deux supports (4) dans son logement (8) afin de générer, en fonction de l'orientation de son axe de pivotement, dans un plan longitudinal vertical du véhicule, pour chaque roue concernée (1), une modification (36) du carrossage ou une modification de l'angle de la trajectoire ou une combinaison des composantes des deux mouvements ;
- les organes de suspension (5 ; 5a ; 23) et / ou le point d'appui (15, 9) du support (4) est et / ou sont réglables par rapport au support (4) et par rapport au châssis pour s'opposer à une modification du positionnement du châssis existant (7) en raison de la géométrie du train de suspension dans le châssis (7) dans le cas d'un mouvement tournant des supports (4) et en raison d'une accélération transversale dans les virages ;
- le dispositif articulé (11) et les organes de suspension (5 ; 5a ; 23) et / ou l'actionneur de réglage (9) peuvent être ajustés à l'aide d'éléments de réglage (32 ; 19 ; 40 ; 42 ; 43) qui sont commandés au moyen de signaux et / ou comme conséquence par exemple d'une action de guidage (13) ;
- moyennant quoi l'énergie de commande pour le réglage du dispositif articulé (11) ainsi que des organes de suspension (5 ; 5a ; 23) et / ou de l'actionneur de réglage (9) est fournie par un réseau de bord du véhicule, conçu de façon adaptée, le dit réseau étant hydraulique (par exemple, pompe de direction assistée et accumulateur de pression), et / ou pneumatique (par exemple, compresseur et réservoir à pression) et / ou électrique (par exemple, dynamo et batterie).

2. Ensemble de train de suspension selon la revendication 1, **caractérisé en ce que** le dispositif articulé (11) est conçu sous la forme d'un palonnier (16) positionné sur le plan médian vertical du châssis (7) et dont les bras (18) mobiles avec leurs extrémités latérales, en direction axiale et circonférentielle sont couplés avec les extrémités correspondantes des supports (4), moyennant quoi le palonnier (16) est réglable autour de son axe de pivotement (12) au moyen d'une commande (19) pour régler les angles de ses bras (18).

3. Ensemble de train de suspension selon la revendication 1, **caractérisé en ce que** le dispositif articulé (11) comporte pour chaque support (4) des éléments de réglage mobiles (32) actionnés individuellement ou tous ensemble au moyen du dispositif articulé (11), lesquels éléments comprennent pour chaque support (4) un rail de guidage (33) et forment pour chaque support (4), en raison de leur alignement, un axe de pivotement.

4. Ensemble de train de suspension selon la revendication 3, **caractérisé en ce qu'**un élément de réglage ajustable individuellement (32) est rattaché à chaque support (4).

5. Ensemble de train de suspension selon la revendication 3, **caractérisé en ce que** le rail de guidage (33) comporte au moins une section non linéaire.

6. Ensemble de train de suspension selon la revendication 3, **caractérisé en ce que** chaque rail de guidage (33) est conçu sous la forme d'un guide de coulisse.

7. Ensemble de train de suspension selon la revendication 6, **caractérisé en ce que** le rail arrière (34) du guide de coulisse (33, 34) se trouvant à supporter la charge en cas de décharge totale d'une roue (1) est prévu avec une garniture (29) élastique et amortissante.

8. Ensemble de train de suspension selon la revendication 1, **caractérisé en ce que** le premier actionneur de réglage (9) comporte sur chaque support (4) un engrenage qui agit en liaison avec un élément d'entraînement denté (par exemple, crémaillère, pignon) lequel est actionné par un mécanisme qui s'appuie contre le châssis (7).

9. Ensemble de train de suspension selon la revendication 1, **caractérisé en ce que** l'actionneur de réglage (9) est conçu sous la forme d'une unité de réglage variable en longueur, laquelle unité agit sur un levier (15) radial au support (4) et appuie celui-ci, qui est réglable, contre le châssis (7).

10. Ensemble de train de suspension selon la revendication 9, **caractérisé en ce que** l'unité de réglage pour chaque roue (1) est conçue comme un cylindre hydraulique (17).

11. Ensemble de train de suspension selon la revendication 1, **caractérisé en ce que** la suspension (5) comporte uniquement ou en supplément aux ressorts mécaniques ou aux ressorts en caoutchouc, des organes de suspension mécaniques (5a) qui sont réglables en ce qui concerne la rigidité des ressorts et / ou l'amortissement et / ou leur longueur.

12. Ensemble de train de suspension selon la revendication 11, **caractérisé en ce que** les organes de suspension (5a) sont des jambes de suspension (23) pneumatiques ou hydropneumatiques.

13. Ensemble de train de suspension selon la revendication 9 et 11, ou 12, **caractérisé en ce que** les organes de suspension (5a ; 23) agissent, pour chaque roue (1) entre leur bras oscillant longitudinal (2) et le levier placé sur le support (4) s'appuyant au moyen de l'unité de réglage (9 ; cylindre 17).

14. Ensemble de train de suspension selon les revendications 1, 2 ou 3, **caractérisé en ce que** le dispositif articulé (11) et les organes de suspension (5 ; 5a ; 23) et / ou l'actionneur de réglage (9 ; 17) sont utilisés pour l'ajustage des éléments de réglage hydrauliques (35 ; 23a ; 17).

15. Ensemble de train de suspension selon la revendication 14, **caractérisé en ce que** dans le réglage du positionnement du châssis (7), le volume d'amortissement des organes de suspension (5a ; 23) de la partie du train de suspension ayant une charge moindre dans un virage est augmenté de façon active et que le volume de la partie chargée dans un virage est réduit de façon active.

16. Ensemble de train de suspension selon la revendication 14, **caractérisé en ce que** les éléments de réglage hydrauliques (35 ; 23a ; 17) sont, à chaque fois, réglés par au minimum un multiplicateur de pression (42 ; 43 ; 85r, l : 86r, l) qui est alimenté par au moins une soupape (41 ; 44a, b ; 45a, b 87r, l), qui est activé par l'obtention d'une valeur de commutation et / ou comme conséquence d'une action de pivotement et qui envoie ou prélève un volume partiel défini vers l'élément de réglage (35) correspondant.

17. Ensemble de train de suspension selon la revendication 16, **caractérisé en ce qu'**il est prévu plusieurs multiplicateurs de pression (42 ; 43 ; 85r, l ; 86r, l) dont les volumes partiels sont proches d'une ligne caractéristique de réglage souhaitée et qu'ils sont, en fonction de la charge de la roue, actionnés l'un après l'autre ou que leur activation se fasse dans des périodes de temps se chevauchant.

18. Ensemble de train de suspension, selon la revendication 17, **caractérisé en ce que** la ligne caractéristique de réglage prend en compte l'action de l'exposant de la compression polytropique du gaz résilient.

19. Ensemble de train de suspension selon la revendication 16, **caractérisé en ce qu'**il est intégré un dispositif papillon avec charge fixe et / ou dépendante de la charge sur la roue et / ou des papillons réglables (51) sur un paramètre de direction, afin de prendre en compte le comportement dans le temps et au réglage lors de l'écoulement du fluide des multiplicateurs de pression (42 ; 43 ; 85r, l : 86r, l ; 87r, l).

20. Ensemble de train de suspension selon la revendication 16, **caractérisé en ce que** la direction (13) est conçue comme un mécanisme de servo-direction et que pour la commande des soupapes (44a ; 45a) pilotées par la direction (13), la dimension du dispositif d'assistance correspondant à une réaction définie sur la direction (13) est fonction du dispositif d'assistance.

21. Ensemble de train de suspension selon la revendication 16, **caractérisé en ce que** pour la commande des soupapes (44a ; 45a) pilotées indépendamment de la direction, la grandeur de la vitesse d'activation (13) est fonction de la direction.

22. Ensemble de train de suspension selon la revendication 20, **caractérisé en ce que**, à la suite de la commande des soupapes dépendant de la charge sur la roue (44a ; 45b), on utilisera la grandeur d'une modification de charge déterminée se produisant après une activation du pivotement (modification de pression, compression / débattement).

23. Ensemble de train de suspension selon la revendication 14, **caractérisé en ce qu'**au moins une partie des éléments de réglage hydrauliques (35 ; 23a ; 17 ; 19) est réglée au moyen d'un aménagement du cylindre à vitesse égale (20 ; 24), laquelle prélève un volume partiel à un élément de réglage connecté et un volume partiel de même taille à l'élément de réglage correspondant, et inversement.

24. Ensemble de train de suspension selon la revendication 1, **caractérisé en ce que** le dispositif articulé (11) peut, au moins pour un des supports (4), pivoter autour d'un axe transversal du véhicule, grâce à un dispositif de balayage horizontal (26) et est réglable dans sa position angulaire par rapport au plan du châssis (7), pour générer dans les parties dépendantes de l'angle de balayage une modification du carrossage et d'un angle de la trajectoire de chaque roue (1) en fonctionnement.

25. Ensemble de train de suspension, selon la revendication 1, **caractérisé en ce que** pour le réglage et la modification de l'angle de pincement des roues (1) le dispositif articulé (11) est réglable, individuellement ou totalement avec les extrémités internes pour chaque support (4), grâce au dispositif de réglage des freins (37) dans la direction longitudinale du véhicule et est efficace pendant au moins une mise en action des freins de roue, pour augmenter la stabilité des freins et du déplacement grâce au réglage de l'angle de pincement.

26. Ensemble de train de suspension selon la revendication 1 et / ou 24 et / ou 25, **caractérisé en ce que** les supports (4), le dispositif pivotant (11 ; éléments de réglage 32 et / ou fléau 16) ainsi que, le cas échéant, l'actionneur de réglage (9 ; 17) et / ou le dispositif de balayage horizontal (26) et / ou le dispositif de réglage des freins (37) avec les éléments de commande correspondants (soupape 41 ; 42a ; 43a ; multiplicateur de pression 40 ; 42 ; 43) et le transport de l'énergie à l'intérieur du châssis(7) sont positionnés à l'abri et contre-boutés au moyen de supports longitudinaux (6) dans un compartiment qui est situé dans la direction de déplacement devant et en arrière des traverses (47) adaptées au train de suspension ainsi qu'avec au moins des protections inférieures.

27. Ensemble de train de suspension selon une ou plusieurs des revendications précédentes, **caractérisé en ce qu'**un réglage des éléments réglables (9 ; 11 ; 5 ; 5a ; 26) se fait de façon active par admission d'énergie de réglage dans les deux dispositifs de réglage ou uniquement dans la direction de réglage positionnée contre l'effet de la charge sur la roue, moyennant quoi ensuite dans l'autre direction, l'énergie de réglage sera elle-même obtenue à partir de l'effet de la charge sur la roue.
